(19) Europäisches Patentamt
European Patent Office
Office européen des brevets

(11) EP 3 892 694 B1

(12) # EUROPEAN PATENT SPECIFICATION

(45) Date of publication and mention of the grant of the patent:
**03.04.2024 Bulletin 2024/14**

(21) Application number: **19894055.3**

(22) Date of filing: **29.11.2019**

(51) International Patent Classification (IPC):
***C09D 175/04*** *(2006.01)* ***C09D 11/10*** *(2014.01)*

(52) Cooperative Patent Classification (CPC):
(C-Sets available)
**C08G 18/0823; C08G 18/0852; C08G 18/12; C08G 18/348; C08G 18/4018; C08G 18/4202; C08G 18/4238; C08G 18/4277; C08G 18/44; C08G 18/4825; C08G 18/6625; C08G 18/755; C09D 11/102; C09D 175/08;** Y02P 20/582 (Cont.)

(86) International application number:
**PCT/JP2019/046757**

(87) International publication number:
**WO 2020/116339 (11.06.2020 Gazette 2020/24)**

(54) **ORGANIC SOLVENT-BASED PRINTING INK HAVING SEPARABILITY, PRINTED MATERIAL, LAMINATE BODY, AND RECYCLED BASE MATERIAL MANUFACTURING METHOD**

DRUCKFARBE AUF DER BASIS EINES ORGANISCHEN LÖSUNGSMITTELS MIT TRENNBARKEIT, BEDRUCKTES MATERIAL, LAMINATKÖRPER UND VERFAHREN ZUR HERSTELLUNG VON RECYCLING-BASISMATERIAL

ENCRE D’IMPRESSION À BASE DE SOLVANT ORGANIQUE PRÉSENTANT UNE SÉPARABILITÉ, MATÉRIAU IMPRIMÉ, CORPS STRATIFIÉ ET PROCÉDÉ DE FABRICATION DE MATÉRIAU DE BASE RECYCLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2018 JP 2018229356**
**29.05.2019 JP 2019100042**
**06.09.2019 JP 2019162640**

(43) Date of publication of application:
**13.10.2021 Bulletin 2021/41**

(73) Proprietors:
- **artience Co., Ltd.**
**Tokyo (JP)**
- **Toyo Ink Co., Ltd.**
**Tokyo 104-8378 (JP)**

(72) Inventors:
- **YAMAGAMI, Tomoe**
**Tokyo 104-8378 (JP)**
- **HAYASAKA, Yuika**
**Tokyo 104-8378 (JP)**
- **HAMADA, Naohiro**
**Tokyo 104-8378 (JP)**
- **SAI, Tetsuya**
**Tokyo 104-8378 (JP)**
- **YASUDA, Hideki**
**Tokyo 104-8378 (JP)**
- **HAYAMA, Riho**
**Tokyo 104-8378 (JP)**

(74) Representative: **SSM Sandmair Patentanwälte Rechtsanwalt Partnerschaft mbB**
**Joseph-Wild-Straße 20**
**81829 München (DE)**

(56) References cited:
**EP-A1- 1 209 180**
**WO-A1-2014/147374**
**JP-A- H0 463 877**
**JP-A- H0 834 867**
**JP-A- H11 209 677**
**JP-A- S58 189 272**
**JP-A- 2001 131 484**
**JP-A- 2003 122 001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**JP-A- 2015 199 516** **JP-A- 2018 052 607**

(52) Cooperative Patent Classification (CPC): (Cont.)

C-Sets
**C08G 18/12, C08G 18/2865;**
**C08G 18/12, C08G 18/3234;**
**C08G 18/12, C08G 18/3271**

## Description

### TECHNICAL FIELD

The present invention relates to the use of an organic solvent-based printing ink and a method for manufacturing a recycled substrate.

### BACKGROUND ART

In recent years, the disposal and dumping of packages, plastic bottles and other plastic products made from plastic films as rubbish in the oceans has become a major environmental pollution problem. These plastic products are broken down in sea water to form fragments of submicron size (microplastics), which then float in the sea water. Ingestion of these plastics by marine organisms such as fish causes the plastics to become concentrated within the bodies of these organisms. There is concern that this may have an effect on the health of sea birds and humans that then consume these marine organisms as food.

In the case of the types of laminated packages described below, toxic substances derived from inks, adhesives or coating layers and the like may also be adhered to the surfaces of these microplastics, creating further concern in terms of environmental conservation. In order to ameliorate these types of problems, a variety of efforts to reduce microplastics are now being started.

The main example of the plastic products mentioned above is food packaging and the like that uses a plastic substrate. In this packaging, a variety of plastic substrates such as polyester substrates (PET), nylon substrates (NY), and polypropylene substrates (OPP) are used as the film substrate. These substrates are printed with a picture layer using gravure inks, flexo inks or other printing inks, subsequently bonded (laminated) to a hot melt resin substrate via an adhesive or the like to form a laminated body, and the laminated body is then cut and thermally fused to form a package. Package forms include configurations in which the picture layer is the outermost layer of the package (referred to as surface printing), and configurations in which the picture layer exists as an intermediate layer between the substrates (referred to as a laminate or reverse printing).

Surface printing also includes configurations in which a substrate or the like is not laminated to the picture layer, so that the picture layer is uncovered, for example, when surface printing is used on labels or the like.

Examples of efforts that are being made to reduce microplastics include packaging in which (1) the plastic substrate has been substituted with a paper, (2) plastic usage is limited to only a single type of plastic substrate (referred to as mono-materialization) to simplify recycling, and (3) impurities are removed and the plastic is recycled.

In (1) above, the use of paper as a raw material is desirable in terms of safety and recyclability, but suffers from inferior gas barrier properties and water resistance compared with plastic substrates. Although coating agents for papers are under investigation, the hurdles to practical application are high. In (2) above, packaging is made using only polyolefin substrates such as polypropylene as plastic substrates to facilitate recycling of the substrates. However, in usage applications that require superior functionality such as retort resistance or light-blocking properties, that type of performance cannot be obtained with polyolefin substrates. Accordingly, technical development of (3) above is being undertaken with comprehensive consideration of recycling efficiency and packaging performance.

In one example of (3) above, tests have been conducted in which the picture layer (surface-printed ink layer) on the outermost surface of a package, which represents an impurity, is removed with an alkaline aqueous solution in a plastic substrate recycling process. For example, Patent Document 1 discloses a technique in which an undercoat layer formed from an acrylic-based resin or styrene-maleic acid-based resin is provided on the plastic substrate, and the surface-printed layer disposed on top of the undercoat layer is then removed using alkaline water. Further, Patent Document 2 discloses a technique in which an ink containing a polyurethane resin having acidic groups or an acrylic resin as a binder resin is used for surface printing, and that printed layer is then removed by a similar treatment with alkaline water. However, these techniques only relate to the removal of a surface-printed ink from the outside of a package, and do not extend to removing an ink layer from a laminated body or separating laminated substrates.

In addition to removal of the surface-printed ink layer to enable plastic recycling, technology for removing an ink layer within a laminated body will be very important for promoting plastic recycling and enabling industrial application to aid environmental conservation. However, technology capable of achieving both of these tasks has yet to be reported.

### PRIOR ART DOCUMENTS

### PATENT DOCUMENTS

Patent Document 1: JP 2001-131484 A
Patent Document 2: JP H11-209677 A

EP 1 209 180 A1 discloses a method for preparing a water-based urethane resin composition by reacting a urethane prepolymer (A), which has an isocyanate group at a terminal end and has a carboxyl group in a molecular side chain, a chain extender (B) of the urethane prepolymer (A), and a basic compound (C) in a reaction solvent (D), which comprises: (1) using, as the urethane prepolymer (A), which has an isocyanate group at a terminal end and has a carboxyl group in a molecular side chain, a urethane prepolymer (a) in which 70 molar % or more of terminal isocyanate groups are attached to carbon of secondary and/or tertiary aliphatic hydrocarbons, the urethane prepolymer being soluble in an alcohol solvent (d), (2) using, as the chain extender (B) of the urethane prepolymer (A), a polyamine (b) having two or more amino groups containing active hydrogen, and (3) using, as the reaction solvent (D), a water-based solvent containing the alcohol solvent (d), has advantages in view of environmental conservation and has good productivity. According to this method, it is possible to obtain a water-based urethane resin composition, which is superior in physical properties such as water resistance and is suited for use as a binder for water-based printing ink.
JP H04 63877 A discloses a binder for printing ink obtained by reacting a mixture of a high-molecular polyol and a specific diisocynate compound with a chain extender. JP S58 189272 A discloses a printing ink composition comprising as a binder a polyurethane resin prepared by the reaction of a particular high molecular weight diol, organic diisocyanate and a chain extender.
WO 2014/147374 A1 discloses an ink comprising: (a) 0.1 to 10 parts of a self-dispersible pigment; (b) 5 to 15 parts of a polymeric latex binder with a glass transition temperature in the range of from 0°C to -30°C; (c) 5 to 15 parts of one or more polar organic solvent(s) with a solubility parameter at 25°C greater than 27.5; (d) 0 to 3 parts of an acetylenic diol surfactant; (e) 0 to 5 parts of biocide; (f) 0 to 10 parts of a viscosity modifier; (g) 0 to 5 parts of one or more organic solvents with a solubility parameter at 25°C less than 27.5; (h) 0 to 5 parts of a cross linking agent; and (i) the balance to 100 parts water; wherein the ratio of latex binder to total solvent is in the range of from 1:3 to 3:1. Also ink jet printing processes, ink-jet ink containers, printed substrates and ink-jet printers are disclosed.

## SUMMARY OF THE INVENTION

### PROBLEMS TO BE SOLVED BY THE INVENTION

The present invention has an object of providing an organic solvent-based printing ink which has favorable printability, enables detachment of the ink or the like from a plastic film in a laminated body having a surface-printed structure or a laminated structure using an alkaline aqueous solution, and exhibits favorable retort applicability in laminated bodies.

### MEANS TO SOLVE THE PROBLEMS

As a result of intensive research relating to the above object, the inventors of the present invention discovered that by using an organic solvent-based printing ink described below, the object could be achieved, and they were therefore able to complete the present invention.
The invention is set out in the appended independent claims. The dependent claims describe advantageous embodiments.

### EFFECTS OF THE INVENTION

By using the organic solvent-based printing ink of an embodiment of the present invention, an organic solvent-based printing ink can be provided which enables detachment of the ink or the like from a plastic film in a laminated body having a surface-printed structure or a laminated structure using an alkaline aqueous solution, and exhibits favorable retort applicability in laminated bodies.

### EMBODIMENTS FOR CARRYING OUT THE INVENTION

Embodiments of the present invention are described below in detail, but the descriptions of the embodiments and requirements presented below are merely examples of embodiments of the present invention, and the present invention is not limited to the content of these embodiments, provided it does not exceed the scope of the invention.
In the following description, the term "organic solvent-based printing ink" is sometimes abbreviated as simply "the printing ink" or "the ink", but the meaning remains the same. Further, a layer formed from the organic solvent-based printing ink is the same as "the detachable layer having detachability from the substrate", and is sometimes abbreviated

as "the detachable layer" or "the ink layer", but the meaning is the same. In contrast, a printing ink that is not applied directly to the substrate and does not affect the detachability is called a "picture ink", and a printed layer of that ink is referred to as "the pictured ink layer" or "the picture layer". The picture layer may be any layer formed from the picture ink, and in the picture layer, there are no limitations on the shape or color or the like of the layer recognized as the printed surface. Accordingly, the picture layer includes, for example, entirely solid layers formed from a picture ink of a single color, and layers formed from a picture ink having a transparent color. However, the picture layer excludes the case of detachable layers.

Embodiments of the present invention are as follows.

A non-claimed embodiment 1 is an organic solvent-based printing ink for forming a detachable layer having detachability from a substrate, wherein the printing ink contains a polyurethane resin with an acid value of 15 to 70 mgKOH/g as a binder resin. When the polyurethane resin has an acid value of 15 mgKOH/g or higher, a neutralization interaction between the polyurethane resin and the alkali facilitates the detachment of the ink layer in the alkaline aqueous solution. When the acid value is not more than 70 mgKOH/g, the adhesion to plastic films is more favorable, resulting in better retort applicability.

Further, a non-claimed embodiment 2 is an organic solvent-based printing ink for forming a detachable layer having detachability from a substrate, wherein the printing ink contains a polyurethane resin with an acid value of 15 to 70 mgKOH/g and a hydroxyl value of 1 to 35 mgKOH/g as a binder resin. When the polyurethane resin has an acid value of 15 mgKOH/g or higher and a hydroxyl value of 1 mgKOH/g or higher, the hydrophilicity provided by the hydroxyl groups and the neutralization interaction with the alkali due to the acid value facilitate the detachment of the ink layer in the alkaline aqueous solution. When the acid value is not more than 70 mgKOH/g and the hydroxyl value is not more than 35 mgKOH/g, the adhesion to plastic films and the water resistance are more favorable, resulting in better retort applicability.

Furthermore, a non-claimed embodiment 3 is an organic solvent-based printing ink for forming a detachable layer having detachability from a substrate, wherein the printing ink contains a polyurethane resin with an acid value of 15 to 70 mgKOH/g as a binder resin, the polyurethane resin contains a structural unit derived from a polyol, and the polyol contains, within the total mass of polyol, at least 50% by mass of a polyester polyol with an ester bond concentration of 4 to 11 mmol/g. The prescribed acid value range provides the same effects as those described above, and by using at least 50% by mass of a polyester polyol with an ester bond concentration of 4 to 11 mmol/g, hydrolyzability of the polyester polyol contributes to further promotion of detachment of the ink layer.

However, the organic solvent-based printing ink described above excludes those cases where the acid value of the polyurethane resin is neutralized within the ink.

The term "detachment" used above refers to detachment caused by neutralization and dissolution and the like in the basic aqueous solution (alkaline aqueous solution). There are no particular limitations on the basic substance used in the basic aqueous solution, and sodium hydroxide (NaOH), potassium hydroxide (KOH), calcium hydroxide ($Ca(OH)_2$), ammonia, barium hydroxide ($Ba(OH)_2$), and sodium carbonate ($Na_2CO_3$) and the like can all be used favorably. The use of NaOH and/or KOH is preferred. However, the detachment conditions in the present invention are not limited to use of these compounds. Detachment includes both those cases where the detachable layer dissolves and separates from the substrate, and cases where the detachable layer separates without dissolving.

Although it is the aforementioned detachable layer that detaches from the substrate in the above alkaline aqueous solution, the term "detachment" also includes cases in which the picture layer, adhesive layer, or substrate layer that does not contact the detachable layer also undergo detachment together with the detachment of the detachable layer.

The expression "having detachability from a substrate" does not mean that the layer which detaches from the substrate is only a portion of the detachable layer. The present invention aims to obtain the substrate following detachment as a recyclable substrate or reusable substrate, and it is preferable that the detachable layer, the picture layer and any other layers are removed from the substrate to the greatest extent possible. Specifically, of 100% by mass of the detachable layer, detachment means removal of at least 50% by mass of the detachable layer in terms of area and film thickness direction. This value is preferably at least 60% by mass and more preferably at least 80% by mass, and the use of configurations in which 90% by mass or more of the detachable layer is removed is particularly desirable.

The detachable layer is provided for the purpose of obtaining a recycled substrate. Accordingly, in the case of solder resists and color resists and the like, although detachment includes a step of dissolving a portion of the layer using an alkaline aqueous solution, a certain amount of the cured layer produced using activated energy rays is designed to be retained even following the alkaline aqueous solution treatment, and therefore the technical concept differs from the detachable layer in the present invention. Accordingly, the detachable layer in the present invention excludes the case of layers formed from solder resists, color resists, or other photosensitive resin compositions.

In terms of the mechanism for the detachment, it is thought that in the case of a laminated body containing the detachable layer (for example, a configuration such as substrate 1 / detachable layer / substrate 2), the alkaline aqueous solution penetrates into a gap between the substrates, contacts the detachable layer, and then causes dissolution or

the like of the detachable layer to cause detachment from the substrate. The detachment step is preferably conducted using a structure having the detachable layer within the cross-section. Even if the laminated body or a packaging bag that uses the laminated body lacks a gap into which the alkaline aqueous solution can penetrate, the laminated body may be cut in the detachment step so that the cross-section includes the detachable layer.

On the other hand, in the case of a surface-printed item having a printed layer and containing the detachable layer (for example, a configuration such as substrate 1 / detachable layer / picture layer), because the alkaline aqueous solution can penetrate the picture layer and contact the detachable layer outside of the cross-section, detachment can be achieved regardless of the cross-section. However, for both surface-printed items and laminated bodies, cutting of the item or body prior to the detachment treatment is preferred.

(Detachable Layer)

The detachable layer in embodiments of the present invention is formed using the organic solvent-based printing ink described below. First is a description of the polyurethane resin that is included in the organic solvent-based printing ink as a binder resin. A binder resin is the main resin component for forming the detachable layer. The term "main" means at least 50% by mass of the total mass of resin components constituting the detachable layer.

<Polyurethane Resin>

In non-claimed embodiment 1, the acid value of the polyurethane resin used in the organic solvent-based printing ink is characterized as being within a range from 15 to 70 mgKOH/g. Further, in non-claimed embodiment 2, the polyurethane resin used in the organic solvent-based printing ink is characterized as having an acid value within a range from 15 to 70 mgKOH/g and a hydroxyl value within a range from 1 to 35 mgKOH/g. Furthermore, in non-claimed embodiment 3, the acid value of the polyurethane resin used in the organic solvent-based printing ink is within a range from 15 to 70 mgKOH/g, and the ester bond concentration or the like is also prescribed.

The acid value indicates the amount of acid in 1 g of the resin, which is calculated by titrating the acid with an alkali, and is recorded as an equivalent number of mg of potassium hydroxide. The hydroxyl value indicates the amount of hydroxyl groups in 1 g of the resin, which is calculated by esterifying or acetylating the hydroxyl groups in the resin, and back titrating the residual acid with an alkali, and is recorded as an equivalent number of mg of potassium hydroxide. The acid value and the hydroxyl value are both values obtained in accordance with JIS K0070. From the viewpoint of achieving a balance between detachability in the alkaline aqueous solution and retort resistance, the polyurethane resin preferably has an acid value within a range from 20 to 50 mgKOH/g, and an acid value of 25 to 40 mgKOH/g is even more preferred. Further, the hydroxyl value is preferably within a range from 10 to 30 mgKOH/g, and a hydroxyl value of 15 to 27 mgKOH/g is even more preferred.

The molecular weight distribution (Mw/Mn) of the polyurethane resin is preferably not more than 6. Mw represents the weight average molecular weight, and Mn represents the number average molecular weight. When Mw/Mn is 6 or less, effects caused by components having an excessively large molecular weight, unreacted components, side-reaction components and other low-molecular weight components can be avoided, and the detachability, drying properties and retort resistance are all favorable. Further, a smaller molecular weight distribution (namely, a sharper molecular weight distribution) yields more uniform contact with the alkaline aqueous solution, resulting in more favorable alkali detachability. The molecular weight distribution is more preferably not more than 5, and even more preferably 4 or less. Further, the molecular weight distribution is preferably at least 1.5, and more preferably 1.2 or greater. The values for Mw, Mn and Mw/Mn can be determined by gel permeation chromatography (GPC), and represent polystyrene-equivalent values. Provided the molecular weight distribution falls within the above range and the acid value falls within the above range, a combination of favorable detachability in alkali, drying properties, substrate adhesion, and retort resistance and the like can be satisfied.

In order to ensure that the molecular weight distribution (Mw/Mn) falls within the above range, the urethane-synthesizing raw material/organic solvent ratio (solid fraction ratio) in the polyurethane synthesis, the dropwise addition rate of reactive raw materials such as the polyisocyanate, and other factors such as the stirring speed and reaction liquid uniformity during the reaction may be set appropriately to achieve a molecular weight distribution (Mw/Mn) within the above range. Further, in those cases where an additional chain extension reaction is conducted, the balance between the stirring speed and the rate of dropwise addition and contact between the polyamine and urethane prepolymer described below, and control of the temperature range during chain extension to a specified temperature range are particularly effective in achieving the prescribed range for the molecular weight distribution.

Furthermore, setting the blend ratio between the reaction raw materials to an appropriate ratio is also effective in ensuring the molecular weight distribution satisfies the prescribed range. Examples of the blend ratio include, for example, the NCO/OH ratio that indicates the ratio between the hydroxyl groups of the polyol and hydroxy acid and the isocyanate groups of the polyisocyanate, and the amino group/NCO ratio that indicates the ratio between the amino

groups of the polyamine and the isocyanates groups of the urethane prepolymer. Further, in order to control the molecular weight distribution, a polymerization terminator (also called a reaction terminator) is preferably used for the purpose of preventing excessive polymerization reaction. Examples of favorable polymerization terminators include monoalcohols and monoamines.

The weight average molecular weight (Mw) of the above polyurethane resin is preferably within a range from 10,000 to 100,000. Mw is more preferably from 15,000 to 70,000, and even more preferably from 15,000 to 50,000. Such a value yields superior blocking resistance and favorable operating efficiency and printability during the printing step of the organic solvent-based printing ink. By also ensuring the molecular weight distribution (Mw/Mn) described above, the detachability in the alkaline aqueous solution improves.

The polyurethane resin described above may have an amine value, and in the case the resin has an amine value, the value is preferably within a range from 0.1 to 20 mgKOH/g, and more preferably from 1 to 10 mgKOH/g. Such a value yields better substrate adhesion. The amine value is the number of mg of potassium hydroxide equal to the equivalent weight of hydrochloric acid required to neutralize the amino groups contained in 1 g of the resin. Measurement of the amine value can be conducted in accordance with JIS K0070 (1992) using the method described below.

First, 0.5 to 2 g of the sample is weighed accurately (sample solid fraction: S g). Fifty mL of a mixed solvent of methanol/methyl ethyl ketone = 60/40 (mass ratio) is then added to dissolve the accurately weighed sample. Bromophenol blue is added to the obtained solution as an indicator, and the resulting solution is titrated with a 0.2 mol/L ethanolic hydrochloric acid solution (potency: f). The point where the color of the solution changes from green to yellow is taken as the end point, and using the titer (A mL) at this point, the amine value can be determined using the formula shown below.

$$\text{Amine value} = (A \times f \times 0.2 \times 56.108)/S \ \ [\text{mgKOH/g}]$$

The polyurethane resin is not limited by the production method used, but the use of a polyurethane resin obtained, for example, by reacting a polyisocyanate, a polyol and a hydroxy acid is preferred.

Further, the use of a polyurethane resin obtained by subjecting a urethane prepolymer obtained by reacting a polyisocyanate, a polyol and a hydroxy acid to an additional reaction with a polyamine (referred to as a chain extension reaction) is even more preferred. In either of the above cases, by using a hydroxy acid, an acid value can be imparted to the polyurethane resin.

(Polyisocyanate)

The polyisocyanate used in forming the polyurethane resin used in the organic solvent-based printing ink is preferably a diisocyanate or triisocyanate, and an aromatic, aliphatic or alicyclic diisocyanate can be used favorably.

Examples include 1,5-naphthalene diisocyanate, 4,4'-diphenylmethane diisocyanate, 4,4'-diphenyldimethylmethane diisocyanate, 4,4'-dibenzyl isocyanate, dimethyldiphenylmethane diisocyanate, tetramethyldiphenylmethane diisocyanate, 1,3-phenylene diisocyanate, 1,4-phenylene diisocyanate, m-xylylene diisocyanate, p-xylylene diisocyanate, o-xylylene diisocyanate, 2,4-tolylene diisocyanate, 2,6-tolylene diisocyanate, and other aromatic diisocyanates,

tetramethylene diisocyanate, hexamethylene diisocyanate, isopropylene diisocyanate, methylene diisocyanate, 2,2,4-trimethylhexamethylene diisocyanate, 2,4,4-trimethylhexamethylene diisocyanate, and other aliphatic diisocyanates,

cyclohexane-1,4-diisocyanate, hydrogenated xylylene diisocyanate, isophorone diisocyanate, lysine diisocyanate, dicyclohexylmethane-4,4'-diisocyanate, 1,3-bis(isocyanatomethyl)cyclohexane, methylcyclohexane diisocyanate, m-tetramethylxylylene diisocyanate, dimer diisocyanate in which the carboxyl groups of dimer acid have been converted to isocyanate groups, and other alicyclic diisocyanates. One of these compounds may be used alone, or a mixture of two or more compounds may be used.

Among the above compounds, in terms of reactivity and the like, the use of at least one compound selected from among isophorone diisocyanate, 4,4'-diphenylmethane diisocyanate, xylylene diisocyanate, hydrogenated xylylene diisocyanate, tolylene diisocyanate, hexamethylene diisocyanate and dicyclohexylmethane-4,4'-diisocyanate is preferred. Triisocyanates having an isocyanurate structure formed by trimerization of these diisocyanates are also preferred.

(Polyol)

The polyurethane resin described above has a structural unit derived from a polyol, and although the polyol is not particularly limited to the following compounds, polyether polyols, polyester polyols, and polycarbonate polyols and the like can be used favorably. Polyol is a generic term for a compound having at least two hydroxyl groups within a

single molecule, but is deemed to exclude the hydroxy acids described below.

The polyol may also use dimer diol, hydrogenated dimer diol, and castor oil-modified polyols and the like. The polyurethane resin preferably has at least one type of structural unit selected from among polyether structural units, polyester structural units and polycarbonate structural units, and more preferably contains a structural unit derived from a polyester polyol.

Structural units derived from the polyol preferably represent 10 to 75% by mass, and more preferably 15 to 70% by mass, of the total mass of the polyurethane resin. This value is even more preferably from 20 to 65% by mass.

The polyol that is used preferably includes at least 5% by mass of structural units derived from a polyester polyol within the total mass of all the polyol-derived structural units. This value is more preferably at least 10% by mass, even more preferably at least 30% by mass, and still more preferably 40% by mass or greater. In addition to the action described below wherein inclusion of a hydroxy acid in the polyurethane resin can impart detachability in alkali, namely the ability to detach the detachable layer and picture layer from the plastic substrate by using an alkaline aqueous solution, alkaline hydrolysis of the ester bond sites of the polyester polyol can further improve the detachability, and therefore the above proportion of structural units derived from a polyester polyol is preferably at least 45% by mass, more preferably at least 50% by mass, even more preferably at least 60% by mass, still more preferably at least 70% by mass, and particularly preferably 80% by mass or greater.

The number average molecular weight of the polyol is preferably within a range from 500 to 10,000. The number average molecular weight used for the polyol is calculated from the hydroxyl value. The hydroxyl value refers to the value measured in accordance with JIS K0070. Provided the number average molecular weight of the polyol is not more than 10,000, the blocking resistance on plastic film is excellent. Further, provided the number average molecular weight of the polyol is at least 500, the polyurethane resin film has superior flexibility, and exhibits excellent adhesion to plastic films. For the above reasons, the number average molecular weight is more preferably within a range from 1,000 to 5,000.

(Polyester Polyol)

Examples of preferred polyester polyols include polyester polyols formed from the condensation product of a dibasic acid and a diol, and polyester polyols formed from a polylactone polyol that is a ring-opening polymerization product of a cyclic ester compound. Polyester diols are preferred. Preferred examples of the above dibasic acid include adipic acid, phthalic anhydride, isophthalic acid, terephthalic acid, maleic acid, fumaric acid, succinic acid, oxalic acid, malonic acid, pimelic acid, azelaic acid, sebacic acid, suberic acid, glutaric acid, 1,4-cyclohexyldicarboxylic acid, dimer acid and hydrogenated dimer acid, and among these, adipic acid and succinic acid and the like are preferred.

Preferred examples of the above diol include ethylene glycol, diethylene glycol, triethylene glycol, propylene glycol, 1,3-propanediol, 1,4-butanediol, 1,3-butanediol, 1,6-hexanediol, 1,8-octanediol, 1,9-nonanediol, neopentyl glycol, 3-methyl-1,5-pentanediol, 2-methyl-1,3-propanediol, 3,3,5-trimethylpentanediol, 2,4-diethyl-1,5-pentanediol, 1,12-octadecanediol, 1,2-alkanediols, 1,3-alkanediols, 1-monoglycerides, 2-monoglycerides, 1-monoglycerin ethers, 2-monoglycerin ethers, dimer diol and hydrogenated dimer diol. A single polyester polyol may be used alone, or a mixture of two or more polyester polyols may be used. Moreover, polyols having 3 or more hydroxyl groups and polybasic carboxylic acids having 3 or more carboxyl groups may also be used in combination as raw materials for the polyester polyol. Preferred examples of the above cyclic ester compounds include $\alpha$-acetolactone, $\beta$-propiolactone, $\gamma$-butyrolactone, $\delta$-valerolactone and $\varepsilon$-caprolactone.

(Ester Bond Concentration)

In non-claimed embodiment 3, the polyol contains 50% by mass, within the total mass of polyol, of a polyester polyol with an ester bond concentration of 4 to 11 mmol/g. Here, the ester bond concentration is a numerical value calculated using formula (1) shown below.

Formula (1)

Ester bond concentration (mmol/g) = total number of moles of ester bonds in polyester polyol (mmol) / total mass of polyester polyol solid fraction (g)

In order to achieve favorable detachability of the ink layer, the ester bond concentration of the polyester polyol is preferably within a range from 7 to 11 mmol/g, more preferably from 8 to 11 mmol/g, and even more preferably from 9 to 11 mmol/g.

In non-claimed embodiment 3, cases where, for example, the polyester polyol has a structural unit represented by general formula (1) shown below are ideal.

General formula (1)

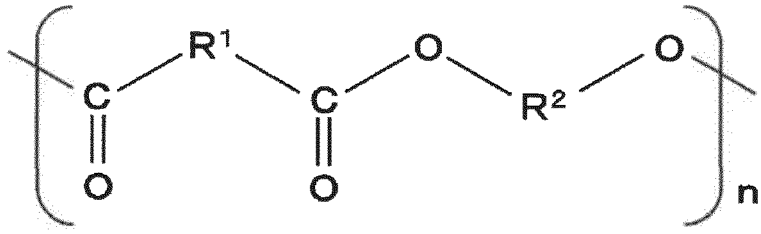

In the formula, $R^1$ and $R^2$ each represent a substituted or unsubstituted alkylene group of 1 to 10 carbon atoms, $R^1$ and $R^2$ may be the same or different, and n represents a natural number.

The polyester polyol can be obtained by polycondensation of a dibasic acid and a diol. In that case, production is conducted under conditions in which (number of moles of hydroxyl groups in diol / number of moles of carboxyl groups in dibasic acid) > 1, and in such cases, the ester bond concentration is represented by formula (2) shown below.

Formula (2)

Ester bond concentration (mmol/g) = total number of moles of carboxyl groups (mmol) / total mass of polyester polyol solid fraction (g)

Here, the total number of moles of carboxyl groups means the total number of moles of carboxyl groups in the dibasic acid used in producing the polyester polyol.

In non-claimed embodiments 1 to 3, the alkylene group ($R^1$) of the dibasic acid used in producing the polyester polyol is a substituted or unsubstituted alkylene group. The number of carbon atoms linearly linking the two carboxyl groups of the dibasic acid is preferably a number from 1 to 6. This number of carbon atoms is more preferably from 1 to 3. Here, the alkylene group ($R^1$) of the dibasic acid is the same as $R^1$ in the above general formula (1). The dibasic acid having $R^1$ is, for example, adipic acid, succinic acid, or sebacic acid or the like.

In non-claimed embodiments 1 to 3, the alkylene group ($R^2$) of the diol used in producing the polyester polyol is a substituted or unsubstituted alkylene group, and the number of carbon atoms linearly linking the two hydroxyl groups of the diol is preferably a number from 1 to 6. This number of carbon atoms is more preferably from 1 to 3. The alkylene group ($R^2$) of the diol is the same as $R^2$ in the above general formula (1). The diol having $R^2$ is, for example, 1,2-propanediol (propylene glycol), 1,3-butanediol, 2-methyl-1,3-propanediol, or 3-methyl-1,5-pentanediol or the like.

The "number of carbon atoms linearly linking the carboxyl groups / number of carbon atoms linearly linking the hydroxyl groups" mentioned above means the number of carbon atoms in $R^1$ and $R^2$ excluding branch-chain carbon atoms or carbon atoms included in substituents. For example, the number of carbon atoms in 3-methyl-1,5-pentanediol is 6, but the "number of carbon atoms linearly linking the hydroxyl groups" is 5. Similarly, the number of carbon atoms in 2-butyl-2-ethyl-1,3-propanediol is 9, but the "number of carbon atoms linearly linking the hydroxyl groups" is 3. A similar definition applies in the case of the dibasic acid. In some cases, the "number of carbon atoms linearly linking" is referred to as the "number of linear carbon atoms", but the meaning is the same.

The polyester polyol is a condensation product of the dibasic acid having carboxyl groups at both terminals of an alkylene group ($R^1$) and the diol having hydroxyl groups at both terminals of an alkylene group ($R^2$), wherein one of the number of carbon atoms linearly linking the carboxyl groups of the dibasic acid and the number of carbon atoms linearly linking the hydroxyl groups of the diol is preferably a number from 1 to 6, and more preferably a number from 1 to 3.

Furthermore, cases in which the polyester diol includes structural units derived from a polyester that is a condensation product of a diol having a branched structure and a dibasic acid are also preferred. Such polyester diols can improve the adhesion with plastic substrates and the retort resistance. The diol having a branched structure is preferably a diol having a structure in which at least one hydrogen atom of an alkylene glycol has been substituted with an alkyl group, and preferred examples of the diol having a branched structure include 1,2-propanediol (propylene glycol), 1,3-butanediol, 2-methyl-1,3-propanediol, neopentyl glycol, 1,4-pentanediol, 3-methyl-1,5-pentanediol, 2,5-hexanediol, 2-methyl-1,4-pentanediol, 2,4-diethyl-1,5-pentanediol, 2-butyl-2-ethyl-1,3-propanediol, 2-methyl-1,8-octanediol, 2,2,4-trimethyl-1,3-pentanediol, and 2,2,4-trimethyl-1,6-hexanediol. Among these, at least one compound selected from among 1,2-propanediol, 3-methyl-1,5-pentanediol, neopentyl glycol and 2-butyl-2-ethyl-1,3-propanediol is preferred, and use of a polyester polyol containing 1,2-propanediol (propylene glycol) and/or 3-methyl-1,5-pentanediol is even more preferred.

(Hydroxy Acid)

The term "hydroxy acid" refers to a compound having both a hydroxyl group and an acidic functional group as active hydrogen groups within a single molecule. Although there are no particular limitations on the hydroxy acid, for example, dimethylolalkanoic acids such as 2,2-dimethylolpropionic acid, 2,2-dimethylolbutanoiac acid and 2,2-dimethylolvaleric acid are preferred. One of these compounds may be used alone, or a mixture of two or more compounds may be used, but the amount used should be adjusted appropriately to ensure that the acid value of the polyurethane resin falls within the range from 15 to 70 mgKOH/g. This acid value refers to a value measured in accordance with JIS K0070.

The term "acidic functional group" used above refers to a functional group which can be neutralized with potassium hydroxide when measuring the acid value, and specifically, includes carboxyl groups and sulfonic acid groups and the like, although a carboxyl group is preferred. In the synthesis process for the polyurethane resin, because this acidic group has a high probability of not reacting with an isocyanate group, the acid value can be retained in the polyurethane resin.

Further, as mentioned above, the polyurethane resin is preferably a polyurethane resin obtained by subjecting a urethane prepolymer having isocyanate groups at the terminals obtained by reacting a polyisocyanate, a polyol and a hydroxy acid to an additional reaction with a polyamine (referred to as a chain extension reaction). In such cases, urea bonds are produced in addition to the urethane bonds. The polyisocyanate, polyol and hydroxy acid preferably use the same types of compounds as those described above.

(Polyamine)

The polyamine mentioned above preferably has a diamine structure, and preferred examples include, but are not limited to diamines such as ethylenediamine, propylenediamine, hexamethylenediamine, isophoronediamine, dicyclohexylmethane-4,4'-diamine, and dimer diamine in which the carboxyl groups of dimer acid have been converted to amino groups. One of these diamines may be used alone, or a mixture of two or more diamines may be used.

Particularly preferred diamines include diamines having a hydroxyl group, such as 2-hydroxyethylethylenediamine, 2-hydroxyethylpropylenediamine, di-2-hydroxyethylethylenediamine, di-2-hydroxyethylpropylenediamine, 2-hydroxypropylethylenediamine, and di-2-hydroxypropylethylene diamine. By using these compounds, a certain amount of unreacted hydroxyl groups are retained in the polyurethane resin production process, meaning the polyurethane resin can be imparted with a hydroxyl value.

Amino acids may also be used for chain extension. Amino acids refer to compounds having both an amino group and an acidic functional group in a single molecule, and preferred examples include glutamine, asparagine, lysine, diaminopropionic acid, omithine, diaminobenzoic acid, and diaminobenzenesulfonic acid. In the synthesis process for the polyurethane resin, because this acidic group has a high probability of not reacting with an isocyanate group, the acid value can be retained in the polyurethane resin.

(Polymerization Terminator)

A polymerization terminator may be used in combination with the polyamine described above. Examples of the polymerization terminator include dialkylamine compounds such as di-n-dibutylamine, amine compounds having a hydroxyl group such as monoethanolamine, diethanolamine, butanolamine, 2-amino-2-methyl-1-propanol, tri(hydroxymethyl)aminomethane, 2-amino-2-ethyl-1,3-propanediol, N-di-2-hydroxyethylethylenediamine, N-di-2-hydroxyethylpropylenediamine and N-di-2-hydroxypropylethylenediamine, and monoamine-type amino acid compounds such as glycine, alanine, glutamic acid, taurine, aspartic acid, aminobutyric acid, valine, aminocaproic acid, aminobenzoic acid, aminoisophthalic acid and sulfamic acid. In order to impart the polyurethane resin with a hydroxyl value, the use of an amine compound having a hydroxyl group is preferred.

(Synthesis of Polyurethane Resin)

The method for synthesizing the polyurethane resin in embodiments of the present invention is described below. The polyurethane resin is produced by reacting a polyisocyanate, a polyol and a hydroxy acid (referred to as the urethanization step). The reaction ratio (NCO/OH) between the polyisocyanate and the polyol and hydroxy acid is preferably within a range from 1.05 to 3.0, and more preferably from 1.1 to 2.8. The urethanization step may, if necessary, use an organic solvent that is inert to isocyanate groups, may use a catalyst if required, and is preferably conducted at a temperature of 70 to 90°C over a period of 2 to 8 hours. During this process, the polyisocyanate may be added dropwise at an appropriate rate while the polyol and the organic solvent are mixed and stirred. The stirring speed during the reaction is preferably set to ensure uniform mixing, with the stirring preferably conducted at an appropriate uniform rate

that is neither excessively slow nor excessively fast.

In those cases where the polyurethane resin is used as a urethane prepolymer having isocyanate groups at the terminals obtained in the above urethanization step, and is subjected to an additional chain extension reaction with a polyamine (referred to as a ureaization reaction step), the reaction is preferably conducted with the solid fractions of the urethane prepolymer and the polyamine to appropriate amounts, and the dropwise addition rate is preferably controlled at a comparatively slow constant rate. In the ureaization reaction step, the viscosity changes significantly as the reaction proceeds, and therefore maintaining a uniform solution is preferable, and the stirring speed is preferably increased. The value of amino groups/NCO that represents the ratio between the isocyanate groups of the urethane prepolymer and the amino groups of the polyamine is preferably within a range from 0.7 to 1.3, and the reaction is preferably conducted within a temperature range from 20 to 60°C for a period of 1 to 8 hours.

(Urethane Bond Concentration)

The urethane bond concentration refers to a value represented by one of the following formulas.

In those cases where the above (number of moles of NCO / number of moles of OH) > 1, the urethane bond concentration is represented by formula (3) below.

Formula (3)

Urethane bond concentration (mmol/g) = total number of moles of hydroxyl groups (mmol) / total mass of solid fraction (g)

Here, the total number of moles of hydroxyl groups means the total number of moles of hydroxyl groups in the polyol and hydroxy acid and the like used in the urethane-forming reaction. Further, the total solid fraction means the total mass of the non-volatile components that form the polyurethane resin.

In those cases where the above (number of moles of NCO / number of moles of OH) < 1, the urethane bond concentration is represented by formula (4) below.

Formula (4)

Urethane bond concentration (mmol/g) = total number of moles of isocyanate groups (mmol) / total mass of solid fraction (g)

Here, the total number of moles of isocyanate groups means the total number of moles of isocyanate groups in the polyisocyanate used in the urethane-forming reaction.

(Urea Bond Concentration)

The urea bond concentration refers to a value represented by one of the following formulas.

In those cases where the prepolymer having terminal isocyanate groups is synthesized under conditions in which the above (number of moles of NCO / number of moles of OH) > 1, a chain extension is then conducted using a polyamine, and the polyurethane resin has amino groups at the terminals, the urea bond concentration is represented by formula (5) below.

Formula (5)

Urea bond concentration (mmol/g) = [total number of moles of isocyanate groups (mmol) - total number of moles of hydroxyl groups (mmol)) / total mass of solid fraction (g)

In those cases where the prepolymer having terminal isocyanate groups is synthesized under conditions in which the above (number of moles of NCO / number of moles of OH) > 1, a chain extension is then conducted using a polyamine, and the polyurethane resin has isocyanate groups at the terminals, the urea bond concentration is represented

by formula (6) below.

Formula (6)

$$\text{Urea bond concentration (mmol/g)} = (\text{total number of moles of amino groups (mmol)}) / \text{total mass of solid fraction (g)}$$

Here, the total number of moles of amino groups means the total number of moles of primary and/or secondary amino groups in the polyamine used for reaction with the prepolymer having terminal isocyanate groups to produce urea bonds.

The urethane bond concentration in the polyurethane resin is preferably within a range from 1 to 3 mmol/g, and more preferably from 1.5 to 2 mmol/g. Further, the urea bond concentration is preferably within a range from 0 to 3 mmol/g, and more preferably from 0.2 to 1 mmol/g. Moreover, the total of the urethane bond concentration and the urea bond concentration is preferably within a range from 1 to 6 mmol/g, and more preferably from 1.7 to 3 mmol/g. Setting the urethane bond concentration and/or the urea bond concentration within the above respective ranges improves the detachability and substrate adhesion.

(Additional Resins)

In some cases, it may be desirable that the binder resin in an embodiment of the present invention also includes one or more additional resins besides the polyurethane resin described above, and examples of these additional resins include, but are not limited to, cellulose-based resins, polyamide resins, vinyl chloride-based resins such as vinyl chloride-vinyl acetate copolymer resins and vinyl chloride-acrylic-based copolymer resins, rosin-based resins, ethylene-vinyl acetate copolymer resins, vinyl acetate resins, acrylic resins, styrene resins, dammar resins, styrene-maleic acid copolymer resins, styrene-acrylic copolymer resins, polyester resins, alkyd resins, terpene resins, phenol-modified terpene resins, ketone resins, cyclized rubbers, chlorinated rubbers, butyral, polyacetal resins, petroleum resins, and modified resins and the like of these resins. One of these resins may be used alone, or a mixture of two or more resins may be used. Among these resins, the use of at least one resin selected from the group consisting of vinyl chloride-based resins, acrylic resins, cellulose-based resins, styrene-maleic acid copolymer resins and rosin-based resins is preferred. At least one resin selected from the group consisting of vinyl chloride-based resins, styrene-maleic acid copolymer resins and rosin-based resins is even more preferred. The ratio between the polyurethane resin and the additional resin is preferably within a range from former : latter = 95:5 to 50:50. Such a ratio facilitates recovery of the detached picture layer and the like.

<Organic Solvent>

The organic solvent-based printing ink of an embodiment of the present invention contains an organic solvent. Although not limited to the organic solvents listed below, examples of organic solvents that may be used include conventional organic solvents, including aromatic-based organic solvents such as toluene and xylene, ketone-based solvents such as methyl ethyl ketone and methyl isobutyl ketone, ester-based organic solvents such as ethyl acetate, n-propyl acetate, isopropyl acetate and isobutyl acetate, alcohol-based organic solvents such as methanol, ethanol, n-propanol, isopropanol and n-butanol, and glycol ether-based solvents such as ethylene glycol monopropyl ether and propylene glycol monomethyl ether, and these solvents are preferably used as mixtures. Of the various possibilities, in terms of achieving favorable gravure ink stability over time in those cases where the ink contains a hydrocarbon-based wax, an organic solvent that does not contain aromatic-based organic solvents such as toluene and xylene (namely, a non-toluene-based organic solvent) is preferred, an organic solvent containing a ketone-based organic solvent is more preferred, and an organic solvent containing an ester-based organic solvent and an alcohol-based organic solvent is even more preferred. In those cases where the ink contains an ester-based organic solvent and an alcohol-based organic solvent, a mixed organic solvent in which the mass ratio of ester-based organic solvent: alcohol-based organic solvent is within a range from 90:10 to 40:60 is particularly preferred. Moreover, the ink may also include a glycol ether-based organic solvent in an amount of not more than 5% by mass relative to 100% by mass of the ink.

<Additives>

The organic solvent-based printing ink may contain appropriate amounts of conventional materials as additives, and various additives may be used as required during the gravure ink production, including pigment derivatives, dispersants, humectants, adhesion assistants, leveling agents, antifoaming agents, antistatic agents, viscosity adjusters, metal chelates, trapping agents, anti-blocking agents, wax components other than those described above, isocyanate-based

curing agents, and silane coupling agents and the like.

<Organic Solvent-Based Printing Ink>

The organic solvent-based printing ink of an embodiment of the present invention includes clear ink and color ink configurations. However, configurations that also contain an organic solvent or other inks or the like are nor excluded, provided they do not alter the scope of the present invention.

<Clear Ink>

The term "clear ink" means that the ink or the printed layer is somewhat cloudy or colorless and transparent, and does not exclude cases having slight coloration due to the binder resin, body pigment or additives or the like. In the clear ink, the solid fraction within the total mass of the ink is preferably within a range from 5 to 50% by mass, and more preferably from 10 to 40% by mass. Moreover, the solid fraction of the binder resin within the total mass of the ink is preferably within a range from 0.5 to 50% by mass, and more preferably from 5 to 30% by mass. By ensuring these solid fractions fall within the above ranges, the viscosity of the clear ink is appropriate, and the printability such as the dot reproducibility is favorable when the ink is applied to a plastic film using an arbitrary printing method. The term "solid fraction" means the total mass percentage of the non-volatile components.

(Body pigment)

The clear ink preferably contains a body pigment. The body pigment is preferably silica, barium sulfate, kaolin, clay, calcium carbonate, magnesium carbonate, or a metal oxide such as zinc oxide or zirconium oxide. These body pigments are used for improving the fluidity, coating film strength and optical properties and the like. Among the above, the use of silica is preferred, and the body pigment is preferably hydrophilic. The average particle size of the body pigment is preferably within a range from 0.5 to 10 μm, and more preferably from 1 to 8 μm. The amount of the body pigment within the total mass of the ink is preferably within a range from 0.5 to 10% by mass, and more preferably from 1 to 5% by mass. This improves the wettability of the picture ink when a picture ink is printed on top of the clear ink.

<Color Ink>

The term "color ink" refers to an organic solvent-based printing ink containing a colorant, and excludes cases of the clear ink described above. The colorant component is preferably a color dye and/or a color pigment. The solid fraction of the color ink relative to the total mass of the ink is preferably within a range from 5 to 50% by mass, and more preferably from 10 to 40% by mass. The colorant is preferably included in an amount sufficient to ensure satisfactory concentration and coloring power for the ink, namely, an amount within a range from 1 to 50% by mass of the total mass of the ink, and is more preferably included in an amount of 3 to 15% by mass. The solid fraction of the binder resin within the total mass of the ink is preferably within a range from 0.5 to 50% by mass, and more preferably from 5 to 30% by mass. By ensuring these amounts fall within the above ranges, the viscosity of the color ink is appropriate, and the printability such as the dot reproducibility is favorable when the ink is applied to a plastic film using an arbitrary printing method. The color ink may use a supplementary body pigment, and the body pigment is preferably the same as those body pigments mentioned above for the clear ink.

(Color Pigment)

The colorant is preferably a color pigment, and the mass ratio between the binder resin and the color pigment (binder resin/pigment) is preferably within a range from 99/1 to 10/90. A mass ratio within a range from 80/20 to 20/80 is more preferred. The color pigment is preferably an organic pigment or an inorganic pigment, and among inorganic pigments, the use of a pigment containing titanium oxide is preferred, whereas among organic pigments, the use of a pigment formed from an organic compound or an organometallic complex is preferred.

Among color pigments, examples of organic pigments include, but are not limited to, soluble azo-based pigments, insoluble azo-based pigments, azo-based pigments, phthalocyanine-based pigments, halogenated phthalocyanine-based pigments, anthraquinone-based pigments, anthanthrone-based pigments, dianthraquinonyl-based pigments, anthrapyrimidine-based pigments, perylene-based pigments, perinone-based pigments, quinacridone-based pigments, thioindigo-based pigments, dioxazine-based pigments, isoindolinone-based pigments, quinophthalone-based pigments, azomethine azo-based pigments, flavanthrone-based pigments, diketopyrrolopyrrole-based pigments, isoindoline-based pigments, indanthrone-based pigments, and carbon blacks and the like. Further, specific examples include carmine 6B, lake red C, permanent red 2B, disazo yellow, pyrazolone orange, carmine FB, cromophtal yellow, cromophtal

red, phthalocyanine blue, phthalocyanine green, dioxazine violet, quinacridone magenta, quinacridone red, indanthrone blue, pyrimidine yellow, thioindigo bordeaux, thioindigo magenta, perylene red, perinone orange, isoindolinone yellow, aniline black, diketopyrrolopyrrole red, and daylight fluorescent pigments.

Among color pigments, examples of inorganic pigments include white inorganic pigments such as titanium oxide, zinc oxide, zinc sulfide and chromium oxide. Among inorganic pigments, the use of titanium oxide is particularly preferred. Titanium oxide has a white color, and is preferred in terms of coloring power, covering power, chemical resistance and weather resistance, and from the viewpoint of printing performance, the titanium oxide is preferably subjected to a silica and/or alumina treatment.

Among color pigments, examples of non-white inorganic pigments include aluminum particles, mica, bronze powder, chrome vermilion, chrome yellow, cadmium yellow, cadmium red, ultramarine blue, Prussian blue, red iron oxide, yellow iron oxide, black iron oxide, titanium oxide and zinc oxide. The aluminum may be in a powdered form or a paste-like form, but use in a paste-like form is preferred in terms of the handling properties and safety. Either leafing aluminum or non-leafing aluminum may be used.

<Production of Organic Solvent-Based Printing Ink>

The organic solvent-based printing ink can be produced by dissolving and/or dispersing the binder resin and the body pigment or color pigment and the like in the organic solvent.

For example, the organic solvent-based printing ink can be produced by dispersing the pigment, the polyurethane resin, the binder resin such as a vinyl chloride-vinyl acetate copolymer resin, silica particles and, if necessary, an organic solvent, and then blending the resulting pigment dispersion with the polyurethane resin, an organic solvent if necessary, and other resins and additives and the like. Further, the viscosity and hue of the organic solvent-based printing ink can be adjusted by appropriate adjustment of the size of the grinding media in the dispersion device, the fill ratio for the grinding media, the time of the dispersion treatment, the discharge rate for the pigment dispersion, and the viscosity and the like of the pigment dispersion. Typically used devices such as a roller mill, ball mill, pebble mill, attritor, or sand mill or the like may be used as the dispersion device. Production using a sand mill is preferred.

The viscosity of the organic solvent-based printing ink is preferably within a range from 20 to 500 mPa·s, and more preferably from 30 to 300 mPa·s. This enables suitable printability to be obtained in the printing process. The viscosity of the printing ink can be adjusted by altering the amounts of the polyurethane resin and other binder resins, the amount of the organic solvent, and the dispersion conditions for the pigment.

(Picture Ink)

The term "picture ink" refers to a printing ink that does not have the detachability described above, and preferred examples include screen inks, gravure inks, flexo inks, inkjet inks, offset inks, and other printing inks. However, the picture ink is not limited to these inks. Among the above, the use of a gravure ink, flexo ink or inkjet ink is preferred, and the use of a gravure ink and/or a flexo ink is even more preferred.

<Printing of Organic Solvent-Based Printing Ink>

Examples of printing methods that can be used favorably for the organic solvent-based printing ink include screen printing, offset printing, flexo printing, dry offset printing, gravure printing, and inkjet printing. Among these, gravure printing or flexo printing is preferred.

<Gravure Printing>

(Gravure Plate)

A gravure plate is a metal cylinder having recesses correspond with each color that have been formed by engraving, etching or laser irradiation. Engraving and laser irradiation have no usage restrictions, and can be set as required in accordance with the pattern. The number of lines is typically within a range from 100 lines to 300 lines, wherein a greater number of lines enables finer printing. The thickness of the printed layer is preferably within a range from 0.1 μm to 100 μm.

(Printer)

In a gravure printer, a single printing unit contains the gravure plate described above and a doctor blade. There are a plurality of printing units, a printing unit can be set corresponding with the organic solvent-based printing ink and

the picture ink, and each unit has an oven drying unit. Printing is conducted by rotation, and employs a web-fed printing system. The type of plate and the type of doctor blade are selected as appropriate, and may be selected in accordance with specifications.

<Flexo Printing>

(Flexo Plate)

Examples of the plates used in flexo printing include photosensitive resin plates which utilize ultraviolet curing with a UV light source, and elastomer material plates that use a direct laser engraving system. Regardless of the method used for forming the image portion of the flexo plate, the number of screening lines on the plate is at least 75 lpi. The sleeve or cushion tape to which the plate is adhered may employ an appropriate material.

(Printer)

Examples of flexo printers include CI type multi-color flexo printers and unit type multi-color flexo printers and the like, and examples of the ink supply system include chamber systems and two roll systems, and any suitable printer may be used.

<Printed Items and Laminated Body>

Preferred examples of the structures of printed items and laminated bodies according to embodiments of the present invention include, but are not limited to, those described below.

- Substrate 1 / detachable layer (clear) / picture layer
- Substrate 1 / detachable layer (color) / picture layer
- Substrate 1 / detachable layer (clear) / adhesive layer / substrate 2
- Substrate 1 / detachable layer (color) / adhesive layer / substrate 2
- Substrate 1 / detachable layer (clear) / picture layer / adhesive layer / substrate 2
- Substrate 1 / detachable layer (color) / picture layer / adhesive layer / substrate 2
- Picture layer /detachable layer (clear) / substrate 1 / adhesive layer / substrate 2
- Picture layer /detachable layer (color) / substrate 1 / adhesive layer / substrate 2
- Substrate 1 / detachable layer (clear) / picture layer / detachable layer (clear) / adhesive layer / substrate 2
- Substrate 1 / detachable layer (color) / picture layer / detachable layer (color) / adhesive layer / substrate 2

In the above structures, "clear" represents a clear ink, and "color" represents a color ink.

<Substrate 1>

Examples of substrates to which the organic solvent-based printing ink can be applied include polyethylene, polypropylene and other polyolefin substrates, polycarbonate substrates, polyethylene terephthalate, polylactic acid and other polyester substrates, polystyrene substrates, substrates of polystyrene-based resins such as AS resins or ABS resins, polyamide substrates, polyvinyl chloride substrates, various polyvinylidene chloride substrates, cellophane substrates, paper substrates, aluminum foil substrates, and film-like or sheet-like substrates formed from composite materials of the above materials. Among these, polyester substrates and polyamide substrates having high glass transition temperatures can be used particularly favorably.

The substrate may be subjected to a surface deposition coating treatment with a metal oxide or the like and/or a coating treatment with a polyvinyl alcohol or the like, and specific examples include GL-AE and the like manufactured by Toppan Printing Co., Ltd. and IB-PET-PXB and the like manufactured by Dai Nippon Printing Co., Ltd., which have aluminum oxide deposited on the substrate surface. Moreover, if necessary, substrates that have been treated with additives such as antistatic agents or ultraviolet inhibitors, or substrates having a surface that has been subjected to a corona treatment or low-temperature plasma treatment may also be used.

<Substrate 2>

Examples of the substrate 2 include the same as the substrates mentioned for the substrate 1, and the two substrates may be the same or different. A thermoplastic substrate (sometimes referred to as a sealant) is preferred, and an unstretched polyethylene substrate, unstretched polypropylene substrate, or unstretched polyester substrate or

the like is preferred.

<Adhesive Layer>

In order to bond the substrate 1 and the substrate 2 together, a lamination step using an adhesive is required. Representative examples of the lamination process include extrusion lamination methods, dry lamination methods, and non-solvent lamination methods. The lamination process is a process in which an adhesive layer is applied to and dried on one surface of the printed item, and the substrate 2 is then laminated thereon by pressure bonding. Preferred examples of the adhesive layer include, but are not limited to, anchor agent layers, molten resin layers, urethane-based adhesive layers, and acrylic-based adhesive layers, and these layers can be obtained using molten extrusion methods or coating methods or the like. For example, a two-pot adhesive containing a mixture of a polyol and an isocyanate curing agent can be used favorably as a urethane-based adhesive, and examples of the polyol include a polyester polyol or a polyether polyol or the like. Specific examples include TM-250HV/CAT-RT86L-60, TM-550/CAT-RT37 and TM-314/CAT-14B and the like manufactured by Toyo-Morton, Ltd.

(Detachment Step)

A recycled substrate manufacturing method according to an embodiment of the present invention includes a step of immersing a printed item or laminated body in a basic aqueous solution (alkaline aqueous solution). In terms of the conditions employed for removing the detachable layer and the like (the detachable layer, the picture layer and various other layers) in embodiments of the present invention, the concentration of the alkaline aqueous solution is preferably within a range from 0.5 to 15% by mass, and more preferably from 1 to 5% by mass. By ensuring that the concentration falls within this range, the alkaline aqueous solution is able to maintain sufficient alkalinity for detachment.

During the detachment process, the alkaline aqueous solution penetrates and contacts the detachable layer, either from the printed layer surface in a printed item or from the edges in the case of a laminated body, and dissolves the detachable layer to enable detachment to occur. Preferred configurations include those cases where the detachable layer is exposed in the cross-section of the printed item or the laminated body, thus enabling the pictured ink layer and/or the substrate or the like to be detached in a shorter period of time.

The immersion time in the basic aqueous solution is preferably within a range from 1 minute to 24 hours, more preferably from 1 minute to 12 hours, and even more preferably from 1 minute to 6 hours. In the case of a surface-printed configuration, the immersion time is preferably within a range from 1 minute to 12 hours, and more preferably from 1 minute to 6 hours. In the case of a reverse-printed (laminated body) configuration, the immersion time is preferably within a range from 1 minute to 24 hours, and more preferably from 1 minute to 12 hours.

Following immersion, by conducting washing in water and then drying, the recycled substrate can be obtained. Provided the detachability of the detachable layer is uniform in the surface direction (with no partial curing or the like), the removal rate of the detachable layer and the accompanying picture layer and/or adhesive layer and the like from the substrate such as the substrate 1 and the substrate 2 is preferably at least 80% by mass, more preferably at least 90% by mass, and even more preferably 95% by mass or more, of the detachable layer on the substrate. During the immersion, the detachment is preferably conducted while the mixture is stirred. For example, when stirring is conducted using the rotating blade of a stirring device, the stirring speed is preferably within a range from 80 to 250 rpm, and more preferably from 80 to 200 rpm.

The temperature of the basic aqueous solution during the immersion is preferably within a range from 25 to 120°C, more preferably not more than 110°C, still more preferably from 30 to 90°C, and particularly preferably from 30 to 80°C. The temperature is the same for both surface-printed configurations and reverse-printed (laminated body) configurations. The concentration of the alkaline aqueous solution is preferably within a range from 0.5 to 15% by mass, more preferably from 0.5 to 10% by mass, and even more preferably from 0.5 to 5% by mass. In the case of a surface-printed configuration, the concentration of the alkaline aqueous solution is preferably from 0.5 to 15% by mass, and more preferably from 0.5 to 10% by mass, whereas in the case of a reverse-printed (laminated body) configuration, the concentration of the alkaline aqueous solution is preferably from 1 to 15% by mass, and more preferably from 1 to 10% by mass. The removal rate for the detachable layer and the accompanying pictured ink layer and/or adhesive layer and the like when the plastic substrate (recycled substrate) is subsequently washed with water and dried is preferably at least 80% by mass, more preferably at least 90% by mass, and even more preferably 95% by mass or greater.

The amount used of the alkaline aqueous solution is preferably within a range from 100-fold to 1,000,000-fold relative to the mass of the printed item or laminated body. Further, in order to improve efficiency, a circulatory system of washing, grinding and stirring the printed item or laminated body may be used.

In an embodiment of the present invention, by subjecting a printed item or laminated body to removal of the detachable layer in an alkaline aqueous solution, followed by water-washing and drying of the substrate, a recycled plastic substrate (recycled substrate) can be obtained. Further, the recycled plastic substrate may be converted to pellet

form for reuse using an extruder or the like.

<Usage Examples of Detachable Layer of Embodiments>

Examples of use of the detachable layer according to an embodiment of the present invention are described below. However, usage of the detachable layer of an embodiment of the present invention is not limited to the following examples.

[1] Use of a detachable layer, wherein

the detachable layer is formed from an organic solvent-based printing ink,
the organic solvent-based printing ink contains a polyurethane resin with an acid value of 15 to 70 mgKOH/g as a binder resin, and
a substrate 1 is recycled by separating a picture layer and/or a substrate 2 from a printed item or a laminated body having the substrate 1, the detachable layer, and the picture layer and/or the substrate 2 in that order.

[2] Use of a detachable layer, wherein

the detachable layer is formed from an organic solvent-based printing ink,
the organic solvent-based printing ink contains a polyurethane resin with an acid value of 15 to 70 mgKOH/g and a hydroxyl value of 1 to 35 mgKOH/g as a binder resin, and
a substrate 1 is recycled by separating a picture layer and/or a substrate 2 from a printed item or a laminated body having the substrate 1, the detachable layer, and the picture layer and/or the substrate 2 in that order.

[3] The use of a detachable layer according to [1] or [2], wherein
the polyurethane resin contains a structural unit derived from a polyol, and the polyol contains at least one compound selected from among polyester polyols, polyether polyols and polycarbonate polyols.
[4] Use of a detachable layer, wherein

the detachable layer is formed from an organic solvent-based printing ink,
the organic solvent-based printing ink contains a polyurethane resin with an acid value of 15 to 70 mgKOH/g as a binder resin, the polyurethane resin contains a structural unit derived from a polyol,
the polyol contains at least 50% by mass of a polyester polyol with an ester bond concentration of 4 to 11 mmol/g, and
a substrate 1 is recycled by separating a picture layer and/or a substrate 2 from a printed item or a laminated body having the substrate 1, the detachable layer, and the picture layer and/or the substrate 2 in that order.

[5] The use of a detachable layer according to any one of [1] to [4], wherein
the organic solvent-based printing ink is an organic solvent-based clear ink.
[6] The use of a detachable layer according to any one of [1] to [5], wherein
the molecular weight distribution (Mw/Mn) of the polyurethane resin is not more than 6.
[7] The use of a detachable layer according to any one of [3] to [6], wherein

the polyester polyol is a condensation product of a dibasic acid having carboxyl groups at both terminals of an alkylene group ($R^1$), and a diol having hydroxyl groups at both terminals of an alkylene group ($R^2$), and
one of the number of carbon atoms linearly linking the two carboxyl groups of the dibasic acid and the number of carbon atoms linearly linking the two hydroxyl groups of the diol is a number from 1 to 6, and the alkylene groups ($R^1$) and ($R^2$) are substituted or unsubstituted alkylene groups.

[8] The use of a detachable layer according to [7], wherein
the number of carbon atoms linearly linking the two carboxyl groups of the dibasic acid and the number of carbon atoms linearly linking the two hydroxyl groups of the diol are both numbers from 1 to 6.
[9] The use of a detachable layer according to any one of [1] to [8] wherein
the organic solvent-based printing ink also contains at least one resin selected from the group consisting of cellulose-based resins, vinyl chloride-based resins, rosin-based resins, acrylic resins, and styrene-maleic acid copolymer resins.
[10] The use of a detachable layer according to any one of [1] to [9] wherein

the organic solvent-based printing ink also contains a body pigment.

The present invention relates to the subject matter disclosed in prior Japanese Application 2018-229356 filed on December 6, 2018, prior Japanese Application 2019-100042 filed on May 29, 2019, and prior Japanese Application 2019-162640 filed on September 6, 2019, the entire contents of which are incorporated by reference herein.

[Example 1]

The present invention is described below in further detail using a series of examples, but the present invention is not limited to these examples. Unless specifically stated otherwise, the units "parts" and "%" used in the present invention represent "parts by mass" and "% by mass" respectively.

(Molecular Weight and Molecular Weight Distribution)

The weight average molecular weight (Mw), the number average molecular weight (Mn) and the molecular weight distribution (Mw/Mn) were measured by gel permeation chromatography (GPC), and determined as equivalent molecular weight values using polystyrenes as standards.

GPC apparatus: Shodex GPC-104 manufactured by Showa Denko K.K.
Columns: the columns below were connected in series

Shodex LF-404 manufactured by Showa Denko K.K. (2 columns)
Shodex LF-G manufactured by Showa Denko K.K.

Detector: RI (refractive index detector)
Measurement conditions: column temperature: 40°C
Eluent: tetrahydrofuran
Flow rate: 0.3 mL/minute

(Acid Value)

In the following description, acid values and hydroxyl values were measured in accordance with the method disclosed in JIS K0070 (1992).

[Synthesis Example 1A] (Production of Polyurethane Resin P1A)

A reactor fitted with a reflux condenser, a dropping funnel, a gas inlet tube, a stirrer and a thermometer was flushed with nitrogen gas while being charged with 124.1 parts of PPG2000 (a polypropylene glycol with a number average molecular weight of 2,000), 3 parts of PMPA2000 (a poly(3-methyl-1,5-pentane adipate)diol with a number average molecular weight of 2,000), 24.6 parts of 2,2-dimethylolbutanoic acid (DMBA), 111.2 parts of isophorone diisocyanate (IPDI) and 200 parts of methyl ethyl ketone (MEK), and the resulting mixture was reacted at 90°C for 5 hours to obtain a resin solution of an isocyanate group-terminated prepolymer. A mixture of 33.6 parts of isophoronediamine (IPDA), 3.5 parts of di-n-butylamine (DBA) and 350 parts of isopropyl alcohol (IPA) was then added dropwise to the obtained isocyanate group-terminated prepolymer at room temperature over a period of 60 minutes, and the resulting mixture was then reacted at 70°C for a further 3 hours. Subsequently, the solid fraction was adjusted using 150 parts of MEK.

A solution of a polyurethane resin (P1A) having a solid fraction of 30%, a weight average molecular weight of 35,000, Mw/Mn=3, and an acid value of 31.1 mgKOH/g was obtained.

Moreover, the polyurethane resins produced below were prepared by adjusting the synthesis conditions such as the dropwise addition volume, the dropwise addition rate, the temperature and the stirring speed, so as to achieve the Mw/Mn values and weight average molecular weight values shown in each of the following tables.

[Synthesis Examples 2A to 13A] (Production of Polyurethane Resins P2A to P13A)

With the exception of using the raw materials and the blend ratios shown in Table 1-1, polyurethane resins (P2A to P13A) were obtained using the same operations as Synthesis Example 1A. The properties such as Mw, Mw/Mn and the acid value are shown in Table 1-2. In the cases of P2A to P4A and P7A, the dropwise addition time for the polyamine and the like was adjusted to achieve the Mw/Mn values shown in Table 1-2.

Abbreviations of raw material compounds not used in Synthesis Example 1A but listed in Table 1-1 are shown below.

PEG2000: a polyethylene glycol with a number average molecular weight of 2,000
PPA2000: a poly(propylene glycol) adipate diol with a number average molecular weight of 2,000

[Synthesis Example 14A] (Production of Polyurethane Resin P14A)

A reactor fitted with a reflux condenser, a dropping funnel, a gas inlet tube, a stirrer and a thermometer was flushed with nitrogen gas while being charged with 63 parts of PPG2000, 148.9 parts of PMPA2000, 23.5 parts of DMBA, 64.6 parts of IPDI and 200 parts of MEK, and the resulting mixture was reacted at 90°C for 5 hours to obtain a resin solution of an isocyanate group-terminated prepolymer. A mixture of 350 parts of IPA and 150 parts of MEK was added to the obtained isocyanate group-terminated prepolymer, and the resulting mixture was reacted at 70°C for 3 hours, thus obtaining a solution of a polyurethane resin (P14A) having a solid fraction of 30%, a number average molecular weight of 20,000, Mw/Mn=3, and an acid value of 29.7 mgKOH/g.

[Synthesis Example 15A] (Production of Polyurethane Resin P15A)

With the exception of using the raw materials and the blend ratio shown in Table 1-1, a solution of a polyurethane resin (P15A) was obtained using the same operations as Synthesis Example 14A.

[Comparative Synthesis Example 1A] (Production of Polyurethane Resin PP1A)

A reactor fitted with a reflux condenser, a dropping funnel, a gas inlet tube, a stirrer and a thermometer was flushed with nitrogen gas while being charged with 73.6 parts of PEG2000, 70.3 parts of PMPA2000, 31.6 parts of DMBA, 101.2 parts of IPDI and 200 parts of MEK, and the resulting mixture was reacted at 90°C for 5 hours to obtain a resin solution of an isocyanate group-terminated prepolymer. A mixture of 23.3 parts of IPDA and 150 parts of IPA was added dropwise to the obtained isocyanate group-terminated prepolymer at room temperature over a period of 60 minutes, 10.0 parts of 28% ammonia water and 690 parts of ion-exchanged water were then added gradually to the above solvent-based polyurethane resin solution to neutralize the resin and make it water-soluble, and the MEK and IPA were then removed by distillation under reduced pressure to obtain an aqueous solution of an aqueous polyurethane resin (PP1A) having an acid value of 39.9 mgKOH/g, a weight average molecular weight of 35,000, and a solid fraction of 30%. The acid value for PP1A represents the value prior to neutralization.

[Comparative Synthesis Example 2A] (Production of Polyurethane Resin PP2A)

A reactor fitted with a reflux condenser, a dropping funnel, a gas inlet tube, a stirrer and a thermometer was flushed with nitrogen gas while being charged with 41.3 parts of PPG2000, 39.4 parts of PMPA2000, 59.0 parts of DMBA, 136.4 parts of IPDI and 200 parts of MEK, and the resulting mixture was reacted at 90°C for 5 hours to obtain a resin solution of an isocyanate group-terminated prepolymer. A mixture of 21.7 parts of IPDA, 2.2 parts of DBA and 350 parts of IPA was then added to the obtained isocyanate group-terminated prepolymer, and the resulting mixture was reacted at 70°C for 3 hours. Subsequently, the solid fraction was adjusted using 150 parts of MEK.

A solution of a polyurethane resin (PP2A) having a solid fraction of 30%, a number average molecular weight of 35,000, Mw/Mn=3.4, and an acid value of 74.5 mgKOH/g was obtained.

[Comparative Synthesis Example 3A] (Production of Polyurethane Resin PP3A)

With the exception of using the raw materials and the blend ratio shown in Table 1-1, a solution of a polyurethane resin (PP3A) was obtained using the same operations as Comparative Synthesis Example 2A.

[Example 1A] (Production of Clear Ink S1A)

A mixture of 87 parts of the polyurethane resin solution P1A (solid fraction: 25%), 5 parts of ethyl acetate (EA), 5 parts of IPA, and 3 parts of silica (hydrophilic silica particles P-73 with an average particle size of 3.8 μm, manufactured by Mizusawa Industrial Chemicals, Ltd.) was mixed and stirred with a disper, thus obtaining a clear ink S1A.

[Examples 2A to 19A] (Production of Clear Inks S2A to S19A)

The raw materials shown in Table 2-1 were mixed in the listed blend ratios using the same method as Example 1A, thus obtaining organic solvent-based printing inks S2A to S19A.

Abbreviations in the table of raw materials not used in Example 1A are shown below.

Vinyl chloride-based resin: a vinyl chloride-vinyl acetate copolymer resin (vinyl chloride : vinyl acetate : vinyl alcohol = 88:1:11) (a solution with a solid fraction of 30%)
Acrylic-based resin: a styrene-acrylic copolymer resin with a weight average molecular weight of 40,000 and an acid value of 60 mgKOH/g (a solution with a solid fraction of 30%)

[Example 20A] (Production of Color Ink S20A)

A mixture of 10 parts of copper phthalocyanine blue (Phthalocyanine LIONOL BLUE FG-7358-G, manufactured by TOYOCOLOR Co., Ltd.), 40 parts of the polyurethane resin (P10), 3 parts of ethyl acetate and 3 parts of IPA was stirred and mixed, the pigment was further dispersed for 20 minutes using a sand mill, and 40 parts of the polyurethane resin solution (P10A), 2 parts of ethyl acetate and 2 parts of IPA were then added and mixed, thus obtaining an indigo-colored printing ink (S20A). The values shown for each component in Table 2-1 represent total values.

[Example 21A] (Production of Color Ink S21A)

The raw materials shown in Table 2-1 were mixed in the listed blend ratios using the same method as Example 20A to obtain an organic solvent-based printing ink S21A.

[Comparative Examples 1A to 5A] (Production of Inks SS1A to SS5A)

With the exception of using the raw materials and the blend ratios shown in Table 2-1, inks SS1A to SS5A were obtained using the same method as Example 1A.

<Production of Printed Item using Clear Ink S1A>

(Printing Configuration A: PET substrate / detachable layer / picture layer)

The clear ink S1A was diluted with an ethyl acetate/IPA mixed solvent (mass ratio: 70/30) to achieve a Zahn cup #3 (manufactured by RIGO Co., Ltd.) value of 15 seconds (25°C). Subsequently, the clear ink S1 and PANNECO AM 92 black (an organic solvent-based gravure ink manufactured by Toyo Ink Co., Ltd.) were printed sequentially onto a corona-treated polyethylene terephthalate (PET) substrate (thickness: 12 μm) using a gravure printer having a gravure plate with a plate depth of 35 μm, and the substrate was then dried at 50°C to obtain a surface-printed item composed of PET substrate / detachable layer (S1A) / picture layer.

<Production of Printed Items using Inks Obtained in Examples and Comparative Examples>

Using each of the inks obtained in the above examples and comparative examples, besides the clear ink S1A, the same procedure as that described above for the production of a printed item using the clear ink S1A was used to produce a printed item having a similar printing configuration.

<Production of Laminated Body using Clear Ink S1A>

(Laminated Configuration A: OPP substrate / detachable layer / picture layer / adhesive layer / VMCPP substrate)

The clear ink S1A was diluted with an ethyl acetate/IPA mixed solvent (mass ratio: 70/30) to achieve a Zahn cup #3 (manufactured by RIGO Co., Ltd.) value of 15 seconds (25°C). Subsequently, the clear ink S1 and LIOALPHA S R92 black (an organic solvent-based gravure ink manufactured by Toyo Ink Co., Ltd.) were printed sequentially onto a corona-treated OPP film (thickness: 20 μm) using a gravure proof 2-color printer having a gravure plate with a plate depth of 35 μm, and drying was conducted at 50°C in each unit to obtain a printed item having the OPP substrate / detachable layer (S1A) / picture layer in that order.

Using a dry laminator, a dry lamination adhesive (TM-340V/CAT-29B, manufactured by Toyo-Morton, Ltd.) was coated onto the picture layer of this printed item and then bonded to a VMCPP (aluminum-deposited unstretched poly-

propylene film, thickness: 25 μm) at a line speed of 40 m/minute, thus obtaining a laminated body having the OPP substrate / detachable layer (S1A) / picture layer / adhesive layer / VMCPP substrate laminated in that order.

<Production of Laminated Bodies using Inks Obtained in Examples and Comparative Examples>

Using each of the inks obtained in the above examples and comparative examples, besides the clear ink S1A, the same procedure as that described above was used to produce a laminated body having a similar laminated structure.

<Production of Packaging Bag using Clear Ink S1A>

(Laminated Configuration B: PET substrate / detachable layer / picture layer / adhesive layer / CPP substrate)

The clear ink S1A was diluted with an ethyl acetate/IPA mixed solvent (mass ratio: 70/30) to achieve a Zahn cup #3 (manufactured by RIGO Co., Ltd.) value of 15 seconds (25°C). Subsequently, the clear ink S1A and LIOALPHA S R92 black (manufactured by Toyo Ink Co., Ltd.) were printed sequentially onto a corona-treated PET substrate (thickness: 12 μm) using a gravure proof 2-color printer having a gravure plate with a plate depth of 35 μm, and drying was conducted at 50°C in each unit to obtain a printed item having the PET substrate / detachable layer (S1A) / picture layer in that order.

Using a dry laminator, a dry lamination adhesive (TM-250HV/CAT-RT86L-60, manufactured by Toyo-Morton, Ltd.) was coated onto the picture layer of this printed item and then bonded to a CPP (unstretched polypropylene substrate, thickness: 30 μm) at a line speed of 40 m/minute, thus obtaining a laminated body having the PET substrate / detachable layer (S1A) / picture layer / adhesive layer / CPP substrate laminated in that order. This laminated body was cut into sections having dimensions of 15 cm × 25 cm, and the edge portions were subjected to thermocompression bonding (called heat-sealing) at 180°C to obtain packaging bags.

<Production of Packaging Bag using Inks Obtained in Examples and Comparative Examples>

Using each of the inks obtained in the above examples and comparative examples, besides the clear ink S1A, the same procedure as that described above was used to produce packaging bags having a similar laminated structure.

<Property Evaluations>

The evaluations described below were conducted using the organic solvent-based printing inks obtained in the above examples and comparative examples, and the printed items, laminated bodies and packaging bags produced from those inks. The evaluation results are shown in Table 2-1 and Table 2-2.

<Evaluation of Detachability in Surface-Printed Items>

Each of the printed items of the printing configuration A produced in the above examples and comparative examples was cut to 4 cm × 4 cm, immersed in 50 g of a 2% aqueous solution of sodium hydroxide (NaOH), and after stirring at 70°C, followed by washing in water and drying, the detachability of the picture layer from the PET substrate was evaluated.

5 (excellent): after stirring for not more than 20 minutes, 100% of the printed layer such as the picture layer had detached from the PET substrate.
4 (good): after stirring for more than 20 minutes but not more than 1 hour, 100% of the printed layer such as the picture layer had detached from the PET substrate.
3 (usable): after stirring for more than 1 hour but not more than 12 hours, at least 80% but not more than 100% of the printed layer such as the picture layer had detached from the PET substrate.
2 (unusable): after stirring for 12 hours, at least 20% but less than 80% of the printed layer such as the picture layer had detached from the PET substrate.
1 (poor): after stirring for 12 hours, less than 20% of the printed layer such as the picture layer had detached from the PET substrate.

Evaluations of 3, 4 and 5 represent the range for which practical application presents no problems.

<Evaluation of Detachability in Laminated Bodies>

Each of the laminated bodies of the laminated configuration A produced in the above examples and comparative examples was cut to 4 cm × 4 cm, immersed in 50 g of a 2% aqueous solution of sodium hydroxide (NaOH), and after stirring at 70°C, followed by washing in water and drying, the detachability of the picture layer from the OPP substrate was evaluated.

5 (excellent): after stirring for not more than 20 minutes, 100% of the printed layer such as the picture layer had detached from the OPP substrate.
4 (good): after stirring for more than 20 minutes but not more than 1 hour, 100% of the printed layer such as the picture layer had detached from the OPP substrate.
3 (usable): after stirring for more than 1 hour but not more than 12 hours, at least 80% but not more than 100% of the printed layer such as the picture layer had detached from the OPP substrate.
2 (unusable): after stirring for 12 hours, at least 20% but less than 80% of the printed layer such as the picture layer had detached from the OPP substrate.
1 (poor): after stirring for 12 hours, less than 20% of the printed layer such as the picture layer had detached from the OPP substrate.

Evaluations of 3, 4 and 5 represent the range for which practical application presents no problems.

<Evaluation of Retort Resistance>

Each of the packaging bags of the laminated configuration B produced in the above examples and comparative examples was subjected to a retort test at 120°C for 80 minutes, and a comparative evaluation was conducted of the laminate strength immediately following the retort test and the laminate strength prior to the retort test.

5 (excellent): absolutely no reduction in the laminate strength was observed following the retort test, and the laminate strength immediately following the retort test was at least 1.0 N/15mm.
4 (good): a reduction in the laminate strength of less than 1.0 N/15mm was observed following the retort test, but the laminate strength immediately following the retort test was at least 1.0 N/15mm.
3 (usable): a reduction in the laminate strength of at least 1.0 N/15mm was observed following the retort test, but the laminate strength immediately following the retort test was at least 1.0 N/15mm.
2 (unusable): a reduction in the laminate strength of at least 1.0 N/15mm was observed following the retort test, and the laminate strength immediately following the retort test was at least 0.5 N/15mm but less than 1.0 N/15mm.
1 (poor): a reduction in the laminate strength of at least 1.0 N/15mm was observed following the retort test, and the laminate strength immediately following the retort test was less than 0.5 N/15mm.

Evaluations of 3, 4 and 5 represent the range for which practical application presents no problems.

<Evaluation of Drying Properties>

Using a bar coater No. 4, each of the organic solvent-based printing inks obtained in the above examples and comparative examples was coated onto a corona-treated PET film (thickness: 12 μm) at a temperature of 25°C. Every 5 seconds from immediately following coating, the coating film was touched with a finger, and the time at which tack disappeared was deemed the drying end point and used to evaluated the drying properties. The bar coater used was a Meyer Bar No. 4 manufactured by Daiichi Rika Co., Ltd.

5 (excellent): drying required less than 15 seconds.
4 (good): drying required at least 15 seconds but less than 30 seconds.
3 (usable): drying required at least 30 seconds but less than 45 seconds.
2 (unusable): drying required at least 45 seconds but less than 60 seconds.
1 (poor): drying required at least 60 seconds.

Evaluations of 3, 4 and 5 represent the range for which practical application presents no problems.

<Example 22A>

With the exceptions of using the color ink S20A in the above evaluations and not using the picture layer, the

same methods as those described above were used to produce a printed item of the printing configuration A, a laminated body of the laminated configuration A and a packaging bag of the laminated configuration B. The printing configuration and the laminated configurations are shown below.

(Printing Configuration of Printed Item)

PET substrate / detachable layer (S20A)

(Laminated Configuration of Laminated Body)

OPP substrate / detachable layer (S20A) / adhesive layer / VMCPP substrate

(Laminated Configuration of Packaging Bag)

PET substrate / detachable layer (S20A) / adhesive layer / CPP substrate

When the same property evaluations as those described above were conducted using each of the above items, the detachability evaluation for the surface-printed item was 3, the detachability evaluation for the laminated body was 3, the retort resistance evaluation was 5, and the drying properties evaluation was 5.

<Example 23A>

Using the color ink S21A in the above evaluations, the same method as Example 22A was used to produce a printed item, a laminated body and a packaging bag having the printing configuration and laminated configurations described below.

(Printing Configuration of Printed Item)

PET substrate / detachable layer (S21A)

(Laminated Configuration of Laminated Body)

OPP substrate / detachable layer (S21A) / adhesive layer / VMCPP substrate

(Laminated Configuration of Packaging Bag)

PET substrate / detachable layer (S21A) / adhesive layer / CPP substrate

When the same property evaluations as those described above were conducted using each of the above items, the detachability evaluation for the surface-printed item was 3, the detachability evaluation for the laminated body was 3, the retort resistance evaluation was 5, and the drying properties evaluation was 5.

The above evaluation results indicate that by using the organic solvent-based printing ink of an embodiment of the present invention, favorable printability can be achieved, the ink and the like can be detached from a plastic film in a laminated body having a surface-printed configuration or a laminated configuration using an alkaline aqueous solution, and favorable retort applicability can be achieved in laminated configurations.

[Table 1-1]

| Table 1-1 | | Parts by weight | | | | | | | | | | | | | | |
|---|---|---|---|---|---|---|---|---|---|---|---|---|---|---|---|---|
| | | Urethanization reaction step | | | | | | | Ureaization reaction step | | | Solid fraction adjustment step | | | | Total |
| | | PPG 2000 | PEG 2000 | PMPA 2000 | PPA 2000 | DMBA | IPDI | MEK | IPDA | DBA | IPA | IPA | MEK | Water | 28% ammonia water | |
| Synthesis Example 1A | P1A | 124.1 | | 3 | | 24.6 | 111.2 | 200 | 33.6 | 3.5 | 350 | | 150 | | | 1000 |
| Synthesis Example 2A | P2A | 204.6 | | | | 13.2 | 66.8 | 200 | 15.2 | 0.2 | 350 | | 150 | | | 1000 |
| Synthesis Example 3A | P3A | 25 | | 59.5 | | 44.0 | 135 | 200 | 36.6 | 0.2 | 350 | | 150 | | | 1000 |
| Synthesis Example 4A | P4A | 25 | | 59.5 | | 44.0 | 135 | 200 | 36.3 | 0.5 | 350 | | 150 | | | 1000 |
| Synthesis Example 5A | P5A | 25 | | 59.5 | | 44.0 | 135 | 200 | 33.3 | 3.5 | 350 | | 150 | | | 1000 |
| Synthesis Example 6A | P6A | 50.9 | | 123 | | 12.9 | 84.8 | 200 | 25.8 | 2.6 | 350 | | 150 | | | 1000 |
| Synthesis Example 7A | P7A | 74.3 | | | | 53.1 | 140.3 | 200 | 32.1 | 0.2 | 350 | | 150 | | | 1000 |
| Synthesis Example 8A | P8A | 114.7 | | 12.2 | | 24.6 | 111.3 | 200 | 33.7 | 3.5 | 350 | | 150 | | | 1000 |
| Synthesis Example 9A | P9A | 64.2 | | 61.3 | | 24.8 | 112.2 | 200 | 34 | 3.5 | 350 | | 150 | | | 1000 |
| Synthesis Example 10A | P10A | 37.3 | | 87.5 | | 24.9 | 112.6 | 200 | 34.2 | 3.5 | 350 | | 150 | | | 1000 |
| Synthesis Example 11A | P11A | 21.5 | | 51.3 | | 37.7 | 142 | 200 | 43.1 | 4.4 | 350 | | 150 | | | 1000 |
| Synthesis Example 12A | P12A | 42.4 | | 98.8 | | 20.9 | 103.3 | 200 | 31.4 | 3.2 | 350 | | 150 | | | 1000 |

(continued)

| Table 1-1 | | Parts by weight | | | | | | | | | | | | | | |
|---|---|---|---|---|---|---|---|---|---|---|---|---|---|---|---|---|
| | | Urethanization reaction step | | | | | | | Ureaization reaction step | | | Solid fraction adjustment step | | | | Total |
| | | PPG 2000 | PEG 2000 | PMPA 2000 | PPA 2000 | DMBA | IPDI | MEK | IPDA | DBA | IPA | IPA | MEK | Water | 28% ammonia water | |
| Synthesis Example 13A | P13A | | | 123.7 | | 25 | 113.4 | 200 | 34.4 | 3.5 | 350 | | 150 | | | 1000 |
| Synthesis Example 14A | P14A | 63 | | 148.9 | | 23.5 | 64.6 | 200 | | | | 350 | 150 | | | 1000 |
| Synthesis Example 15A | P15A | 63 | | | 148.9 | 23.5 | 64.6 | 200 | | | | 350 | 150 | | | 1000 |
| Comparative Synthesis Example 1A | PP1A | | 73.6 | | 70.3 | 31.6 | 101.2 | 200 | 23.3 | | 150 | | | 690 | 10 | 1350 |
| Comparative Synthesis Example 2A | PP2A | 41.3 | | 39.4 | | 59 | 136.4 | 200 | 21.7 | 2.2 | 350 | | 150 | | | 1000 |
| Comparative Synthesis Example 3A | PP3A | 96 | | 91.5 | | 9.6 | 77.1 | 200 | 23.4 | 2.4 | 350 | | 150 | | | 1000 |

[Table 1-2]

| Table 1-2 | | Property Values | | | |
|---|---|---|---|---|---|
| | | Mw | 3 Mw/Mn | Acid value [mgKOH/g] | Structural unit % derived from polyester polyol |
| Synthesis Example 1A | P1A | 35,000 | 3.0 | 31.1 | 2.4 |
| Synthesis Example 2A | P2A | 50,000 | 7.1 | 16.7 | 0.0 |
| Synthesis Example 3A | P3A | 35,000 | 6.8 | 55.5 | 70.4 |
| Synthesis Example 4A | P4A | 35,000 | 4.9 | 55.5 | 70.4 |
| Synthesis Example 5A | P5A | 35,000 | 3.1 | 55.5 | 70.4 |
| Synthesis Example 6A | P6A | 35,000 | 2.8 | 16.3 | 70.7 |
| Synthesis Example 7A | P7A | 40,000 | 7.3 | 67.0 | 0.0 |
| Synthesis Example 8A | P8A | 35,000 | 3.1 | 31.1 | 9.6 |
| Synthesis Example 9A | P9A | 35,000 | 3.5 | 31.3 | 48.8 |
| Synthesis Example 10A | P10A | 35,000 | 2.9 | 31.4 | 70.1 |
| Synthesis Example 11A | P11A | 35,000 | 3.0 | 47.6 | 70.5 |
| Synthesis Example 12A | P12A | 35,000 | 2.9 | 26.4 | 70.0 |
| Synthesis Example 13A | P13A | 35,000 | 3.0 | 31.6 | 100.0 |
| Synthesis Example 14A | P14A | 20,000 | 3.0 | 29.7 | 70.3 |
| Synthesis Example 15A | P15A | 20,000 | 3.5 | 29.7 | 70.3 |
| Comparative Synthesis Example 1A | PP1A | 35,000 | 3.8 | 39.9(*) | 48.9 |
| Comparative Synthesis Example 2A | PP2A | 35,000 | 3.4 | 74.5 | 48.8 |
| Comparative Synthesis Example 3A | PP3A | 35,000 | 3.6 | 12.1 | 48.8 |
| (*) indicates acid value prior to neutralization | | | | | |

[Table 2-1]

| Table 2-1 | | | Example 1A | Example 2A | Example 3A | Example 4A | Example 5A | Example 6A | Example 7A | Example 8A | Example 9A | Example 10A | Example 11A | Example 12A | Example 13A | Example 14A | Example 15A | Example 16A | Example 17A | Example 18A | Example 19A | Example 20A | Example 21A |
|---|---|---|---|---|---|---|---|---|---|---|---|---|---|---|---|---|---|---|---|---|---|---|---|
| | | | S1A | S2A | S3A | S4A | S5A | S6A | S7A | S8A | S9A | S10A | S11A | S12A | S13A | S14A | S15A | S16A | S17A | S18A | S19A | S20A | S21A |
| Ink composition | Polyurethane resin | P1A | 87 | | | | | | | | | | | | | | | | | | | | |
| | | P2A | | 87 | | | | | | | | | | | | | | | | | | | |
| | | P3A | | | 87 | | | | | | | | | | | | | | | | | | |
| | | P4A | | | | 87 | | | | | | | | | | | | | | | | | |
| | | P5A | | | | | 87 | | | | | | | | | | | | | | | | |
| | | P6A | | | | | | 87 | | | | | | | | | | | | | | | |
| | | P7A | | | | | | | 87 | | | | | | | | | | | | | | |
| | | P8A | | | | | | | | 87 | | | | | | | | | | | | | |
| | | P9A | | | | | | | | | 87 | | | | | | | | | | | | |
| | | P10A | | | | | | | | | | 87 | | | | | | 84 | | 84 | | 80 | |
| | | P11A | | | | | | | | | | | 87 | | | | | | | | | | |
| | | P12A | | | | | | | | | | | | 87 | | | | | | | | | |
| | | P13A | | | | | | | | | | | | | 87 | | | | 84 | | 84 | | 80 |
| | | P14A | | | | | | | | | | | | | | 87 | | | | | | | |
| | | P15A | | | | | | | | | | | | | | | 87 | | | | | | |
| | | PP1A | | | | | | | | | | | | | | | | | | | | | |
| | | PP2A | | | | | | | | | | | | | | | | | | | | | |
| | | PP3A | | | | | | | | | | | | | | | | | | | | | |
| | Other resin | Vinyl chloride-based resin | | | | | | | | | | | | | | | | 3 | 3 | | | | |
| | | Acrylic resin | | | | | | | | | | | | | | | | | | 3 | 3 | | |
| | Solvent | EA | 5 | 5 | 5 | 5 | 5 | 5 | 5 | 5 | 5 | 5 | 5 | 5 | 5 | 5 | 5 | 5 | 5 | 5 | 5 | 5 | 5 |
| | | IPA | 5 | 5 | 5 | 5 | 5 | 5 | 5 | 5 | 5 | 5 | 5 | 5 | 5 | 5 | 5 | 5 | 5 | 5 | 5 | 5 | 5 |
| | | Water | | | | | | | | | | | | | | | | | | | | | |
| | Pigment | Silica particles | 3 | 3 | 3 | 3 | 3 | 3 | 3 | 3 | 3 | 3 | 3 | 3 | 3 | 3 | 3 | 3 | 3 | 3 | 3 | | |
| | | Copper phthalocyanine | | | | | | | | | | | | | | | | | | | | 10 | 10 |
| | Total | | 100 | 100 | 100 | 100 | 100 | 100 | 100 | 100 | 100 | 100 | 100 | 100 | 100 | 100 | 100 | 100 | 100 | 100 | 100 | 100 | 100 |
| Detachability in surface-printed item | | | 4 | 4 | 5 | 5 | 5 | 4 | 4 | 5 | 5 | 5 | 5 | 5 | 5 | 5 | 5 | 5 | 5 | 5 | 5 | 3 | 3 |
| Detachability in laminated body | | | 3 | 3 | 3 | 4 | 4 | 3 | 3 | 4 | 4 | 5 | 5 | 5 | 5 | 5 | 5 | 5 | 5 | 5 | 5 | 3 | 3 |
| Retort resistance | | | 4 | 3 | 3 | 4 | 4 | 5 | 3 | 4 | 4 | 5 | 5 | 5 | 5 | 5 | 5 | 5 | 5 | 5 | 5 | 5 | 5 |
| Drying properties | | | 5 | 3 | 3 | 4 | 5 | 5 | 3 | 5 | 5 | 5 | 5 | 5 | 5 | 5 | 5 | 5 | 5 | 5 | 5 | 5 | 5 |

[Table 2-2]

| Table 2-2 | | | Comparative Example 1A | Comparative Example 2A | Comparative Example 3A | Comparative Example 4A | Comparative Example 5A |
|---|---|---|---|---|---|---|---|
| | | | SS1A | SS2A | SS3A | SS4A | SS5A |
| Ink composition | Polyurethane resin | P1A | | | | | |
| | | P2A | | | | | |
| | | P3A | | | | | |
| | | P4A | | | | | |
| | | P5A | | | | | |
| | | P6A | | | | | |
| | | P7A | | | | | |
| | | P8A | | | | | |
| | | P9A | | | | | |
| | | P10A | | | | | |
| | | P11A | | | | | |
| | | P12A | | | | | |
| | | P13A | | | | | |
| | | P14A | | | | | |
| | | P15A | | | | | |
| | | PP1A | 87 | | | | |
| | | PP2A | | 87 | | | |
| | | PP3A | | | 87 | | |
| | Other resin | Vinyl chloride-based resin | | | | 87 | |
| | | Acrylic resin | | | | | 87 |
| | Solvent | EA | | 5 | 5 | 5 | 5 |
| | | IPA | | 5 | 5 | 5 | 5 |
| | | Water | 10 | | | | |
| | Pigment | Silica particles | 3 | 3 | 3 | 3 | 3 |
| | | Copper phthalocyanine | | | | | |
| | | Total | 100 | 100 | 100 | 100 | 100 |
| Detachability in surface-printed item | | | 4 | 5 | 1 | 1 | 5 |
| Detachability in laminated body | | | 1 | 5 | 1 | 1 | 2 |
| Retort resistance | | | 4 | 1 | 5 | 1 | 1 |
| Drying properties | | | 1 | 4 | 5 | 5 | 5 |

[Example 2]

The present invention is described below in further detail using a series of examples, but the present invention is not limited to these examples. Unless specifically stated otherwise, the units "parts" and "%" used in the present invention represent "parts by mass" and "% by mass" respectively.

(Molecular Weight and Molecular Weight Distribution)

The weight average molecular weight (Mw), the number average molecular weight (Mn) and the molecular weight distribution (Mw/Mn) were measured by gel permeation chromatography (GPC), and determined as equivalent molecular weight values using polystyrenes as standards.

GPC apparatus: Shodex GPC-104 manufactured by Showa Denko K.K.
Columns: the columns below were connected in series

Shodex LF-404 manufactured by Showa Denko K.K. (2 columns)
Shodex LF-G manufactured by Showa Denko K.K.

Detector: RI (refractive index detector)
Measurement conditions: column temperature: 40°C
Eluent: tetrahydrofuran
Flow rate: 0.3 mL/minute

(Acid Value and Hydroxyl Value)

In the following description, acid values and hydroxyl values were measured in accordance with the method disclosed in JIS K0070 (1992).

[Synthesis Example 1B] (Production of Polyurethane Resin P1B)

A reactor fitted with a reflux condenser, a dropping funnel, a gas inlet tube, a stirrer and a thermometer was flushed with nitrogen gas while being charged with 198.0 parts of PPA (a poly(propylene glycol) adipate diol with a number average molecular weight of 2,000), 13.3 parts of 2,2-dimethylolbutanoic acid (DMBA), 76.0 parts of isophorone diisocyanate (IPDI) and 200 parts of methyl ethyl ketone (MEK), and the resulting mixture was reacted at 90°C for 5 hours to obtain a resin solution of a urethane prepolymer having terminal isocyanate groups. A mixture of 12.2 parts of 2-(2-aminoethylamino)ethanol (AEA), 0.4 parts of ethanolamine (MEA) and 350 parts of isopropyl alcohol (IPA) was then added dropwise to the obtained isocyanate group-terminated urethane prepolymer resin solution at room temperature over a period of 60 minutes, and the resulting mixture was then reacted at 70°C for a further 3 hours. Subsequently, the solid fraction was adjusted using 150 parts of MEK.

A solution of a polyurethane resin (P1B) having a solid fraction of 30%, a weight average molecular weight of 33,000, Mw/Mn=2.9, an acid value of 16.8 mgKOH/g and a hydroxyl value of 23.2 mgKOH/g was obtained. The polyester polyol percentage in the polyol in P1B was 100% by mass.

Moreover, the polyurethane resins produced below were prepared by adjusting the synthesis conditions such as the dropwise addition volume, the dropwise addition rate, the temperature and the stirring speed, so as to achieve the Mw/Mn values and weight average molecular weight values shown in each of the following tables.

[Synthesis Examples 2B to 14B and 16B] (Production of Polyurethane Resins P2B to P14B and P16B)

With the exception of using the raw materials and the blend ratios shown in Table 3-1, polyurethane resins (P2B to P14B and P16B) were obtained using the same operations as Synthesis Example 1B. The properties such as Mw, Mw/Mn and the acid value are shown in Table 3-2.

Abbreviations of raw material compounds not used in Synthesis Example 1B but listed in Table 3-1 are shown below.

PMPA: a poly(3-methyl-1,5-pentanediol) adipate diol with a number average molecular weight of 2,000
PCL: a polycaprolactone diol with a number average molecular weight of 2,000 (PLACCEL 220, manufactured by Daicel Corporation, ester bond concentration: 8.3 mmol/g)
PC: a polycarbonate diol, liquid at 25°C, with a number average molecular weight of 2,000 having 3-methyl-1,5-pentanediol / 1,6-hexanediol = 9/1
PPG: a polypropylene glycol with a number average molecular weight of 2,000
IPDA: isophoronediamine
DBA: di-n-butylamine

[Synthesis Example 15B] (Production of Polyurethane Resins P15B)

A reactor fitted with a reflux condenser, a dropping funnel, a gas inlet tube, a stirrer and a thermometer was flushed with nitrogen gas while being charged with 212.1 parts of PPA, 27.8 parts of DMBA, 60.1 parts of IPDI and 200 parts of MEK, and the resulting mixture was reacted at 90°C for 7 hours. Subsequently, the solid fraction was adjusted using 150 parts of MEK and 350 parts of IPA, thus obtaining a solution of a polyurethane resin (P15B) having a solid fraction of 30%, a weight average molecular weight of 40,000, Mw/Mn=3.5, an acid value of 35.1 mgKOH/g and a hydroxyl value of 8.7 mgKOH/g was obtained. The polyester polyol percentage in the polyol in P15B was 100% by mass.

[Synthesis Example C1] (Synthesis of Polyester Polyol C1)

A round-bottom flask fitted with a reflux condenser, a thermometer, a water separator and a nitrogen gas inlet was charged with 54.3 parts of 1,10-decanedicarboxylic acid, 45.7 parts of 1,10-decanediol and 0.002 parts of tetrabutyl titanate, and an esterification was conducted for 8 hours at 230°C under a stream of nitrogen while the water produced by the condensation was removed from the system. Following confirmation that the acid value of the polyester was not more than 15, the degree of vacuum was gradually increased using a vacuum pump to halt the reaction. As a result, a polyester polyol (C1) having a number average molecular weight of 2,000, a hydroxyl value of 56.1 mgKOH/g and an acid value of 0.3 mgKOH/g was obtained. The ester bond concentration was 4.5 mmol/g, the number of linear carbon atoms in $R^1$ was 10, and the number of linear carbon atoms in $R^2$ was 10.

[Synthesis Examples C2 to C17] (Synthesis of Polyester Polyols C2 to C17)

With the exception of using the raw materials and the blend ratios shown in Table 4, polyester polyols C2 to C17 were obtained using the same method as that described for Synthesis Example C1. The numbers of linear carbon atoms in $R^1$ and $R^2$, and the ester bond concentration are also shown in Table 4.

[Synthesis Example 1a] (Production of Polyurethane Resin U1)

A reactor fitted with a reflux condenser, a dropping funnel, a gas inlet tube, a stirrer and a thermometer was flushed with nitrogen gas while being charged with 158.7 parts of the polyester polyol A1, 15.9 parts of PPG, 27.6 parts of DMBA, 88.2 parts of IPDI and 200 parts of MEK, and the resulting mixture was reacted at 90°C for 5 hours to obtain a resin solution of an isocyanate group-terminated prepolymer. A mixture of 9.1 parts of AEA, 0.5 parts of MEA and 350 parts of IPA was then added dropwise to the obtained isocyanate group-terminated prepolymer at room temperature over a period of 60 minutes, and the resulting mixture was then reacted at 70°C for a further 3 hours. Subsequently, the solid fraction was adjusted using 150 parts of MEK.

A solution of a polyurethane resin (U1) having a solid fraction of 30%, a weight average molecular weight of 45,000, Mw/Mn=3.9 and an acid value of 34.9 mgKOH/g was obtained. The urethane bond concentration was 1.83 mmol/g, the urea bond concentration was 0.61 mmol/g, and the total of the urethane bond concentration and the urea bond concentration was 2.43 mmol/g. Further, the polyester polyol percentage within the polyol was 90.9% by mass.

[Synthesis Examples 2a to 25a] (Production of Polyurethane Resins U2 to U25)

With the exception of using the raw materials and the blend ratios shown in Table 4-1, polyurethane resins (U2 to U25) were obtained using the same operations as those described for Synthesis Example 1a. Properties such as Mw, Mw/Mn, the acid value, and the bond concentrations are recorded in Table 4-2.

[Synthesis Example 26a] (Production of Polyurethane Resin U26)

A reactor fitted with a reflux condenser, a dropping funnel, a gas inlet tube, a stirrer and a thermometer was flushed with nitrogen gas while being charged with 141.1 parts of the polyester polyol A17, 14.1 parts of PPG, 27.7 parts of DMBA, 92.4 parts of IPDI and 200 parts of MEK, and the resulting mixture was reacted at 90°C for 5 hours to obtain a resin solution of an isocyanate group-terminated prepolymer. A mixture of 9.2 parts of AEA, 15.0 parts of IPDA, 0.4 parts of MEA and 350 parts of IPA was then added dropwise to the obtained isocyanate group-terminated prepolymer resin solution at room temperature over a period of 60 minutes, and the resulting mixture was then reacted at 70°C for a further 3 hours. Subsequently, the solid fraction was adjusted using 150 parts of MEK.

A solution of a polyurethane resin (U26) having a solid fraction of 30%, a weight average molecular weight of 35,000, Mw/Mn=3.3 and an acid value of 35.0 mgKOH/g was obtained. The urethane bond concentration was 1.76 mmol/g, the urea bond concentration was 1.01 mmol/g, and the total of the urethane bond concentration and the urea bond concentration was 2.77 mmol/g. Further, the polyester polyol percentage within the polyol was 90.9% by mass.

[Comparative Synthesis Examples 1B to 4B] (Production of Polyurethane Resins PP1B to PP4B)

With the exception of using the raw materials and the blend ratios shown in Table 5-1, solutions of polyurethane resins (PP1B to PP4B) were obtained using the same operations as those described for Synthesis Example 1a.

[Comparative Synthesis Example 5B] (Production of Polyurethane Resin PP5B)

A reactor fitted with a reflux condenser, a dropping funnel, a gas inlet tube, a stirrer and a thermometer was flushed with nitrogen gas while being charged with 132.7 parts of PPA, 29.5 parts of PPG, 27.7 parts of DMBA, 96.5 parts of IPDI and 200 parts of MEK, and the resulting mixture was reacted at 90°C for 5 hours to obtain a resin solution of an isocyanate group-terminated prepolymer. A mixture of 13.6 parts of AEA and 150 parts of IPA was then added dropwise to the obtained isocyanate group-terminated prepolymer at room temperature over a period of 60 minutes, 10.0 parts of 28% ammonia water and 690 parts of ion-exchanged water were then added gradually to the above solvent-based polyurethane resin solution to neutralize the resin and make it water-soluble, and the MEK and IPA were then removed by distillation under reduced pressure to obtain an aqueous solution of an aqueous polyurethane resin (PP5B) having an acid value of 35.0 mgKOH/g, a weight average molecular weight of 43,000, and a solid fraction of 30%. The acid value for PPSB represents the value prior to neutralization.

[Comparative Synthesis Examples 6B and 7B] (Production of Polyurethane Resins PP6B and PP7B)

With the exception of using the raw materials and the blend ratios shown in Table 5-1, solutions of polyurethane resins (PP6B and PP7B) were obtained using the same operations as those described for Synthesis Example 1a.

[Comparative Synthesis Example D1] (Synthesis of Polyester Polyol D1)

With the exceptions of replacing the 54.3 parts of 1,10-decanedicarboxylic acid with 53.1 parts of eicosanedioic acid, and replacing the 4.5.7 parts of 1,10-decanediol with 1,16-hexadecanediol, a polyester polyol D1 having a number average molecular weight of 2,000, a hydroxyl value of 56.1 mgKOH/g and an acid value of 0.3 mgKOH/g was obtained using the same method as that described above for Synthesis Example A1. The ester bond concentration was 2.9 mmol/g, the number of linear carbon atoms in $R^1$ was 18, and the number of linear carbon atoms in $R^2$ was 16.

[Comparative Synthesis Example 8B] (Production of Polyurethane Resin PP8B)

A reactor fitted with a reflux condenser, a dropping funnel, a gas inlet tube, a stirrer and a thermometer was flushed with nitrogen gas while being charged with 143.1 parts of the polyester polyol D1, 31.8 parts of PPG, 27.7 parts of DMBA, 88.4 parts of IPDI and 200 parts of MEK, and the resulting mixture was reacted at 90°C for 5 hours to obtain a resin solution of an isocyanate group-terminated prepolymer. A mixture of 9.1 parts of AEA and 150 parts of IPA was then added dropwise to the obtained isocyanate group-terminated prepolymer at room temperature over a period of 60 minutes, 10.0 parts of 28% ammonia water and 690 parts of ion-exchanged water were then added gradually to the above solvent-based polyurethane resin solution to neutralize the resin and make it water-soluble, and the MEK and IPA were then removed by distillation under reduced pressure to obtain an aqueous solution of an aqueous polyurethane resin (PP8B) having an acid value of 34.9 mgKOH/g, a weight average molecular weight of 48,000, and a solid fraction of 30%. The acid value for PP8B represents the value prior to neutralization.

The raw materials and blend ratios used in the production of each of the polyurethane resins PP1B to PP8B are shown in Table 5-1. Further, values for the molecular weight, the molecular weight distribution, the acid value, the hydroxyl value, the polyester polyol percentage, and the bond concentrations and the like are shown in Table 5-2.

[Example 1B] (Production of Clear Ink S1B)

A mixture of 87 parts of the solution of the polyurethane resin P1B (solid fraction: 30%), 5 parts of ethyl acetate (EA), 5 parts of IPA, and 3 parts of silica (hydrophilic silica particles P-73 with an average particle size of 3.8 μm, manufactured by Mizusawa Industrial Chemicals, Ltd.) was mixed and stirred with a disper, thus obtaining a clear ink S1B.

[Examples 2B to 13B, and 15B to 23B] (Production of Clear Inks S2B to S13B and S15B to S23B)

With the exception of using the raw materials and blend ratios shown in Table 3-3 and Table 3-4, the same method as Example 1B was used to obtain clear inks S2B to S13B and S15B to S23B.

Abbreviations in the tables of raw materials not used in Example 1B are shown below.

Vinyl chloride-based resin: a vinyl chloride-vinyl acetate copolymer resin (vinyl chloride : vinyl acetate : vinyl alcohol = 88:1:11) (a solution with a solid fraction of 30%)

Acrylic-based resin: a styrene-acrylic copolymer resin with a weight average molecular weight of 40,000 and an acid value of 60 mgKOH/g (a solution with a solid fraction of 30%)

Polyethylene particles: HI-WAX 220P, manufactured by Mitsui Chemicals, Inc.
Barium sulfate: BARIACE B-30, manufactured by Sakai Chemical Industry Co., Ltd.

[Example 14B] (Production of Color Ink S14B)

A mixture of 10 parts of copper phthalocyanine blue (Phthalocyanine LIONOL BLUE FG-7358-G, manufactured by TOYOCOLOR Co., Ltd.), 40 parts of the polyurethane resin (P5), 3 parts of EA and 3 parts of IPA was stirred and mixed, the pigment was further dispersed for 20 minutes using a sand mill, and 40 parts of the polyurethane resin solution (P10), 2 parts of EA and 2 parts of IPA were then added and mixed, thus obtaining an indigo-colored printing ink (S14B). The values shown for each component in Table 3-3 and Table 3-4 represent total values.

[Examples 24B to 26B] (Production of Color Inks S24B to S26B)

With the exception of using the raw materials and the blend ratios shown in Table 3-4, color inks S24B to S26B were obtained using the same method as Example 14B.

[Examples 1a to 26a] (Production of Clear Inks T1 to T26)

With the exception of using the raw materials and the blend ratios shown in Table 4-3 and Table 4-4, clear inks T1 to T26 were obtained using the same method as Example 1B.

[Examples 27a to 29a] (Production of Color Inks T27 to T29)

With the exception of using the raw materials and the blend ratios shown in Table 4-3 and Table 4-4, color inks T27 to T29 were obtained using the same method as Example 14B.

[Comparative Examples 1B to 8B] (Production of Inks SS1B to SS8B)

With the exception of using the raw materials and the blend ratios shown in Table 5-3, inks SS1B to SS8B were obtained using the same method as Example 1B.

[Comparative Example 9B] (Production of Color Ink SS9B)

With the exception of using the raw materials and the blend ratios shown in Table 5-3, a color ink SS9B was obtained using the same method as Example 14B.

<Production of Printed Item using Clear Ink S1B>

(Printing Configuration A: PET substrate / detachable layer / picture layer)

The clear ink S1B was diluted with an EA/IPA mixed solvent (mass ratio: 70/30) to achieve a Zahn cup #3 (manufactured by RIGO Co., Ltd.) value of 15 seconds (25°C). Subsequently, the clear ink S1 and PANNECO AM 92 black (an organic solvent-based gravure ink manufactured by Toyo Ink Co., Ltd.) were printed sequentially onto a corona-treated polyethylene terephthalate (PET) substrate (thickness: 12 μm) using a gravure printer having a gravure plate with a plate depth of 35 μm, and the substrate was then dried at 50°C to obtain a surface-printed item composed of PET substrate / detachable layer (S1B) / picture layer.

<Production of Printed Items using Inks Obtained in Examples and Comparative Examples>

Using each of the inks obtained in the above examples and comparative examples, besides the clear ink S1B, the same procedure as that described above for the production of a printed item using the clear ink S1B was used to produce a printed item having a similar printing configuration.

<Production of Laminated Body using Clear Ink S1B>

(Laminated Configuration A: OPP substrate / detachable layer / picture layer / adhesive layer / VMCPP substrate)

The clear ink S1B was diluted with an EA/IPA mixed solvent (mass ratio: 70/30) to achieve a Zahn cup #3

(manufactured by RIGO Co., Ltd.) value of 15 seconds (25°C). Subsequently, the clear ink S1B and LIOALPHA S R92 black (an organic solvent-based gravure ink manufactured by Toyo Ink Co., Ltd.) were printed sequentially onto a corona-treated unstretched polypropylene (OPP) film (thickness: 20 μm) using a gravure proof 2-color printer having a gravure plate with a plate depth of 35 μm, and drying was conducted at 50°C in each unit to obtain a printed item having the OPP substrate / detachable layer (S1B) / picture layer in that order.

Using a dry laminator, a dry lamination adhesive (TM-340V/CAT-29B, manufactured by Toyo-Morton, Ltd.) was coated onto the picture layer of this printed item and then bonded to a VMCPP (aluminum-deposited unstretched polypropylene film, thickness: 25 μm) at a line speed of 40 m/minute, thus obtaining a laminated body having the OPP substrate / detachable layer (S1B) / picture layer / adhesive layer / VMCPP substrate laminated in that order.

<Production of Laminated Bodies using Inks Obtained in Examples and Comparative Examples>

Using each of the inks obtained in the above examples and comparative examples, besides the clear ink S1B, the same procedure as that described above was used to produce a laminated body having a similar laminated structure.

<Production of Packaging Bag using Clear Ink S1B>

(Laminated Configuration B: PET substrate / detachable layer / picture layer / adhesive layer / CPP substrate)

The clear ink S1B was diluted with an EA/IPA mixed solvent (mass ratio: 70/30) to achieve a Zahn cup #3 (manufactured by RIGO Co., Ltd.) value of 15 seconds (25°C). Subsequently, the clear ink S1 and LIOALPHA S R92 black (manufactured by Toyo Ink Co., Ltd.) were printed sequentially onto a corona-treated polyethylene terephthalate (PET) substrate (thickness: 12 μm) using a gravure proof 2-color printer having a gravure plate with a plate depth of 35 μm, and drying was conducted at 50°C in each unit to obtain a printed item having the PET substrate / detachable layer (S1B) / picture layer in that order.

Using a dry laminator, a dry lamination adhesive (TM-250HV/CAT-RT86L-60, manufactured by Toyo-Morton, Ltd.) was coated onto the picture layer of this printed item and then bonded to a CPP (unstretched polypropylene substrate, thickness: 30 μm) at a line speed of 40 m/minute, thus obtaining a laminated body having the PET substrate / detachable layer (S1B) / picture layer / adhesive layer / CPP substrate laminated in that order. This laminated body was cut into sections having dimensions of 15 cm × 25 cm, and the edge portions were subjected to thermocompression bonding (called heat-sealing) at 180°C to obtain packaging bags.

<Production of Packaging Bag using Inks Obtained in Examples and Comparative Examples>

Using each of the inks obtained in the above examples and comparative examples, besides the clear ink S1B, the same procedure as that described above was used to produce packaging bags having a similar laminated structure.

<Property Evaluations>

The evaluations described below were conducted using the organic solvent-based printing inks obtained in the above examples and comparative examples, and the printed items, laminated bodies and packaging bags produced from those inks. The evaluation results are shown in Table 3-3, Table 3-4, Table 4-3, Table 4-4, and Table 5-3.

<Evaluation of Detachability in Surface-Printed Items>

Each of the printed items of the printing configuration A produced in the above examples and comparative examples was cut to 4 cm × 4 cm, immersed in 50 g of a 2% aqueous solution of sodium hydroxide (NaOH), and after stirring at 40°C, followed by washing in water and drying, the detachability of the picture layer from the PET substrate was evaluated.

5 (excellent): after stirring for not more than 20 minutes, 100% of the printed layer such as the picture layer had detached from the PET substrate.
4 (good): after stirring for more than 20 minutes but not more than 1 hour, 100% of the printed layer such as the picture layer had detached from the PET substrate.
3 (usable): after stirring for more than 1 hour but not more than 12 hours, at least 80% but not more than 100% of the printed layer such as the picture layer had detached from the PET substrate.
2 (unusable): after stirring for 12 hours, at least 20% but less than 80% of the printed layer such as the picture layer had detached from the PET substrate.

1 (poor): after stirring for 12 hours, less than 20% of the printed layer such as the picture layer had detached from the PET substrate.

Evaluations of 3, 4 and 5 represent the range for which practical application presents no problems.

<Evaluation of Detachability in Laminated Bodies>

Each of the laminated bodies of the laminated configuration A produced in the above examples and comparative examples was cut to 4 cm × 4 cm, immersed in 50 g of a 2% aqueous solution of sodium hydroxide (NaOH), and after stirring at 40°C, followed by washing in water and drying, the detachability of the picture layer from the OPP substrate was evaluated.

5 (excellent): after stirring for not more than 20 minutes, 100% of the printed layer such as the picture layer had detached from the OPP substrate.
4 (good): after stirring for more than 20 minutes but not more than 1 hour, 100% of the printed layer such as the picture layer had detached from the OPP substrate.
3 (usable): after stirring for more than 1 hour but not more than 12 hours, at least 80% but not more than 100% of the printed layer such as the picture layer had detached from the OPP substrate.
2 (unusable): after stirring for 12 hours, at least 20% but less than 80% of the printed layer such as the picture layer had detached from the OPP substrate.
1 (poor): after stirring for 12 hours, less than 20% of the printed layer such as the picture layer had detached from the OPP substrate.

Evaluations of 3, 4 and 5 represent the range for which practical application presents no problems.

<Evaluation of Retort Resistance>

Each of the packaging bags of the laminated configuration B produced in the above examples and comparative examples was subjected to a retort test at 120°C for 80 minutes, and a comparative evaluation was conducted of the laminate strength immediately following the retort test and the laminate strength prior to the retort test.

5 (excellent): absolutely no reduction in the laminate strength was observed following the retort test, and the laminate strength immediately following the retort test was at least 1.0 N/15mm.
4 (good): a reduction in the laminate strength of less than 1.0 N/15mm was observed following the retort test, but the laminate strength immediately following the retort test was at least 1.0 N/15mm.
3 (usable): a reduction in the laminate strength of at least 1.0 N/15mm was observed following the retort test, but the laminate strength immediately following the retort test was at least 1.0 N/15mm.
2 (unusable): a reduction in the laminate strength of at least 1.0 N/15mm was observed following the retort test, and the laminate strength immediately following the retort test was at least 0.5 N/15mm but less than 1.0 N/15mm.
1 (poor): a reduction in the laminate strength of at least 1.0 N/15mm was observed following the retort test, and the laminate strength immediately following the retort test was less than 0.5 N/15mm.

Evaluations of 3, 4 and 5 represent the range for which practical application presents no problems.

<Evaluation of Drying Properties>

Using a bar coater No. 4, each of the organic solvent-based printing inks obtained in the above examples and comparative examples was coated onto a corona-treated PET film (thickness: 12 μm) at a temperature of 25°C. Every 5 seconds from immediately following coating, the coating film was touched with a finger, and the time at which tack disappeared was deemed the drying end point and used to evaluated the drying properties. The bar coater used was a Meyer Bar No. 4 manufactured by Daiichi Rika Co., Ltd.

5 (excellent): drying required less than 15 seconds.
4 (good): drying required at least 15 seconds but less than 30 seconds.
3 (usable): drying required at least 30 seconds but less than 45 seconds.
2 (unusable): drying required at least 45 seconds but less than 60 seconds.
1 (poor): drying required at least 60 seconds.

Evaluations of 3, 4 and 5 represent the range for which practical application presents no problems.

<Evaluation of Substrate Adhesion (Tape Adhesion) in Surface-Printed Items>

Using each of the printed items of the printing configuration A produced in the above examples and comparative examples, a cellophane tape (a registered trademark) (width: 12 mm) manufactured by Nichiban Co., Ltd. was bonded to the printed layer, and the degree of detachment of the ink coating film when the tape was peeled gradually from the printed layer, and then peeled rapidly from partway through the pulling process, was evaluated.

5 (excellent): even upon rapid peeling, the ink coating film underwent absolutely no detachment.
4 (good): the ink coating film detached in less than 25% of the surface area of the rapidly peeled portion.
3 (usable): the ink coating film detached in at least 25% but less than 75% of the surface area of the rapidly peeled portion.
2 (unusable): the ink coating film detached in at least 75% of the surface area of the rapidly peeled portion, or a portion of the ink coating film detached in the gradually peeled portion.
1 (poor): the ink coating film detached completely in the gradually peeled portion.

Evaluations of 3, 4 and 5 represent the range for which practical application presents no problems.

<Example 27B>

With the exceptions of using the color ink S14B in the above evaluations and not using the picture layer, the same methods as those described above were used to produce a printed item of the printing configuration A, a laminated body of the laminated configuration A and a packaging bag of the laminated configuration B. The printing configuration and the laminated configurations are shown below.

(Printing Configuration of Printed Item)

PET substrate / detachable layer (S14B)

(Laminated Configuration of Laminated Body)

OPP substrate / detachable layer (S14B) / adhesive layer / VMCPP substrate

(Laminated Configuration of Packaging Bag)

PET substrate / detachable layer (S14B) / adhesive layer / CPP substrate

When the same property evaluations as those described above were conducted using each of the above items, the detachability evaluation for the surface-printed item was 4, the detachability evaluation for the laminated body was 3, the tape adhesion evaluation was 5, the retort resistance evaluation was 5, and the drying properties evaluation was 5.

The above evaluation results indicate that by using the organic solvent-based printing ink of an embodiment of the present invention, favorable printability can be achieved, the ink and the like can be detached from the plastic substrate in a laminated body having a surface-printed configuration or a laminated configuration using an alkaline aqueous solution, and favorable retort applicability can be achieved in laminated configurations. Moreover, by using the organic solvent-based printing ink of an embodiment of the present invention, favorable substrate adhesion can be obtained in surface-printed configurations.

[Table 3-1]

| Table 3-1 | | Parts by mass | | | | | | | | | | | | | | | |
|---|---|---|---|---|---|---|---|---|---|---|---|---|---|---|---|---|---|
| | | Urethanization reaction step | | | | | | | | Ureaization reaction step | | | | | Solid fraction adjustment | | Total |
| | | PPA | PMPA | PCL | PC | PPG | DMBA | IPDI | MEK | AEA | IPDA | MEA | DBA | IPA | MEK | IPA | |
| Synthesis Example 1B | P1B | 198.0 | | | | | 13.3 | 76.0 | 200 | 12.2 | | 0.4 | | 350 | 150 | | 1000 |
| Synthesis Example 2B | P2B | 135.8 | | | | | 45.7 | 109.8 | 200 | 8.4 | | 0.4 | | 350 | 150 | | 1000 |
| Synthesis Example 3B | P3B | 157.8 | | | | | 27.0 | 93.9 | 200 | 2.0 | 18.3 | | 0.9 | 350 | 150 | | 1000 |
| Synthesis Example 4B | P4B | 152.7 | | | | | 27.8 | 101.1 | 200 | 18.1 | | 0.4 | | 350 | 150 | | 1000 |
| Synthesis Example 5B | P5B | 161.9 | | | | | 27.7 | 96.4 | 200 | 13.6 | | 0.5 | | 350 | 150 | | 1000 |
| Synthesis Example 6B | P6B | 90.0 | 23.3 | | | 48.6 | 27.7 | 96.4 | 200 | 13.6 | | 0.5 | | 350 | 150 | | 1000 |
| Synthesis Example 7B | P7B | 168.2 | | | | | 27.7 | 90.1 | 200 | 13.5 | | 0.5 | | 350 | 150 | | 1000 |
| Synthesis Example 8B | P8B | | | | | 161.9 | 27.7 | 96.4 | 200 | 13.6 | | 0.5 | | 350 | 150 | | 1000 |
| Synthesis Example 9B | P9B | | | | 161.9 | | 27.7 | 96.4 | 200 | 13.6 | | 0.5 | | 350 | 150 | | 1000 |
| Synthesis Example 10B | P10B | 8.8 | | | | 153.1 | 27.7 | 96.4 | 200 | 13.6 | | 0.5 | | 350 | 150 | | 1000 |
| Synthesis Example 11B | P11B | 192.0 | | | | | 17.5 | 77.6 | 200 | 5.9 | 6.7 | 0.4 | | 350 | 150 | | 1000 |
| Synthesis Example 12B | P12B | 161.9 | | | | | 27.7 | 96.4 | 200 | 13.6 | | 0.5 | | 350 | 150 | | 1000 |
| Synthesis Example 13B | P13B | 161.9 | | | | | 27.7 | 96.4 | 200 | 13.6 | | 0.5 | | 350 | 150 | | 1000 |
| Synthesis Example 14B | P14B | | | 161.9 | | | 27.7 | 96.4 | 200 | 13.6 | | 0.5 | | 350 | 150 | | 1000 |
| Synthesis Example 15B | P15B | 212.1 | | | | | 27.8 | 60.1 | 200 | | | | | | 150 | 350 | 1000 |
| Synthesis Example 16B | P16B | 64.8 | | | | 97.2 | 27.7 | 96.4 | 200 | 13.6 | | 0.5 | | 350 | 150 | | 1000 |

[Table 3-2]

| Table 3-2 | | Property values | | | | | | | |
|---|---|---|---|---|---|---|---|---|---|
| | | Mw | Mw/Mn | Acid value [mgKOH/g] | Hydroxyl value [mgKOH/g] | Polyesterpolyol percentage in polyol [%] | Urethane bond concentration [mmol/g] | Urea bond concentration [mmol/g] | Urethane bond concentration + urea bond concentration [mmol/g] |
| Synthesis Example 1B | P1B | 33,000 | 2.9 | 16.8 | 23.2 | 100 | 1.26 | 0.80 | 2.06 |
| Synthesis Example 2B | P2B | 35,000 | 3.2 | 57.7 | 16.2 | 100 | 2.51 | 0.56 | 3.07 |
| Synthesis Example 3B | P3B | 36,000 | 3.1 | 34.1 | 3.6 | 100 | 1.74 | 0.87 | 2.61 |
| Synthesis Example 4B | P4B | 40,000 | 3.3 | 35.0 | 33.8 | 100 | 1.76 | 1.18 | 2.94 |
| Synthesis Example 5B | P5B | 35,000 | 3.0 | 35.0 | 25.7 | 100 | 1.79 | 0.89 | 2.68 |
| Synthesis Example 6B | P6B | 37,000 | 3.0 | 35.0 | 25.7 | 70 | 1.79 | 0.89 | 2.68 |
| Synthesis Example 7B | P7B | 52,000 | 7.0 | 35.0 | 25.7 | 100 | 1.81 | 0.89 | 2.70 |
| Synthesis Example 8B | P8B | 30,000 | 2.8 | 35.0 | 25.7 | 0 | 1.79 | 0.89 | 2.68 |
| Synthesis Example 9B | P9B | 37,000 | 3.1 | 35.0 | 25.7 | 0 | 1.79 | 0.89 | 2.68 |

(continued)

| Table 3-2 | | Property values | | | | | | | |
|---|---|---|---|---|---|---|---|---|---|
| | | Mw | Mw/Mn | Acid value [mgKOH/g] | Hydroxyl value [mgKOH/g] | Polyesterpolyol percentage in polyol [%] | Urethane bond concentration [mmol/g] | Urea bond concentration [mmol/g] | Urethane bond concentration + urea bond concentration [mmol/g] |
| Synthesis Example 10B | P10B | 33,000 | 3.0 | 35.0 | 25.7 | 6 | 1.79 | 0.89 | 2.68 |
| Synthesis Example 11B | P11B | 33,000 | 2.9 | 22.0 | 11.9 | 100 | 1.43 | 0.66 | 2.09 |
| Synthesis Example 12B | P12B | 30,000 | 4.0 | 35.0 | 25.7 | 100 | 1.79 | 0.89 | 2.68 |
| Synthesis Example 13B | P13B | 40,000 | 2.5 | 35.0 | 25.7 | 100 | 1.79 | 0.89 | 2.68 |
| Synthesis Example 14B | P14B | 35,000 | 2.8 | 35.0 | 25.7 | 100 | 1.79 | 0.89 | 2.68 |
| Synthesis Example 15B | P15B | 40,000 | 3.5 | 35.1 | 8.7 | 100 | 1.80 | 0.00 | 1.80 |
| Synthesis Example 16B | P16B | 30,000 | 2.7 | 35.0 | 25.7 | 40 | 1.79 | 0.89 | 2.68 |

[Table 3-3]

| Table 3-3 | | | Example 1B | Example 2B | Example 3B | Example 4B | Example 5B | Example 6B | Example 7B | Example 8B | Example 9B | Example 10B | Example 11B | Example 12B | Example 13B |
|---|---|---|---|---|---|---|---|---|---|---|---|---|---|---|---|
| | | | S1B | S2B | S3B | S4B | S5B | S6B | S7B | S8B | S9B | S10B | S11B | S12B | S13B |
| Ink composition | Polyurethane resin | P1B | 87 | | | | | | | | | | | | |
| | | P2B | | 87 | | | | | | | | | | | |
| | | P3B | | | 87 | | | | | | | | | | |
| | | P4B | | | | 87 | | | | | | | | | |
| | | P5B | | | | | 87 | | | | | | | | |
| | | P6B | | | | | | 87 | | | | | | | |
| | | P7B | | | | | | | 87 | | | | | | |
| | | P8B | | | | | | | | 87 | | | | | |
| | | P9B | | | | | | | | | 87 | | | | |
| | | P10B | | | | | | | | | | 87 | | | |
| | | P11B | | | | | | | | | | | 87 | | |
| | | P12B | | | | | | | | | | | | 87 | |
| | | P13B | | | | | | | | | | | | | 87 |
| | | P14B | | | | | | | | | | | | | |
| | | P15B | | | | | | | | | | | | | |
| | | P16B | | | | | | | | | | | | | |
| | Other resin | Vinyl chloride-based resin | | | | | | | | | | | | | |
| | | Acrylic-based resin | | | | | | | | | | | | | |
| | Solvent | EA | 5 | 5 | 5 | 5 | 5 | 5 | 5 | 5 | 5 | 5 | 5 | 5 | 5 |
| | | IPA | 5 | 5 | 5 | 5 | 5 | 5 | 5 | 5 | 5 | 5 | 5 | 5 | 5 |
| | Pigment | Silica particles | 3 | 3 | 3 | 3 | 3 | 3 | 3 | 3 | 3 | 3 | 3 | 3 | 3 |
| | | Polyethylene particles | | | | | | | | | | | | | |
| | | Barium sulfate | | | | | | | | | | | | | |
| | | Copper phthalocyanine | | | | | | | | | | | | | |
| | Total | | 100 | 100 | 100 | 100 | 100 | 100 | 100 | 100 | 100 | 100 | 100 | 100 | 100 |
| Detachability in surface-printed item 40°C | | | 3 | 5 | 4 | 4 | 5 | 5 | 3 | 4 | 5 | 3 | 5 | 5 | 5 |
| Detachability in laminated body 40°C | | | 3 | 4 | 3 | 3 | 5 | 4 | 3 | 3 | 3 | 3 | 4 | 5 | 5 |
| Tape adhesion | | | 5 | 3 | 5 | 3 | 5 | 5 | 3 | 5 | 4 | 5 | 5 | 4 | 5 |
| Retort resistance | | | 4 | 3 | 5 | 3 | 5 | 5 | 3 | 4 | 5 | 5 | 5 | 5 | 5 |
| Drying properties | | | 5 | 3 | 4 | 4 | 4 | 4 | 3 | 3 | 5 | 4 | 4 | 4 | 4 |

[Table 3-4]

| Table 3-4 | | | Example 14B | Example 15B | Example 16B | Example 17B | Example 18B | Example 19B | Example 20B | Example 21B | Example 22B | Example 23 | Example 24 | Example 25 | Example 26 |
|---|---|---|---|---|---|---|---|---|---|---|---|---|---|---|---|
| | | | S14B | S15B | S16B | S17B | S18B | S19B | S20B | S21B | S22B | S23B | S24B | S25B | S26B |
| Ink composition | Polyurethane resin | P1B | | | | | | | | | | | 80 | | |
| | | P2B | | | | | | | | | | | | | |
| | | P3B | | | | | | | | | | | | 80 | |
| | | P4B | | | | | | | | | | | | | 80 |
| | | P5B | 80 | 82 | 77 | | | 73.5 | 80 | 82 | 77 | | | | |
| | | P6B | | | | | | | | | | | | | |
| | | P7B | | | | | | | | | | | | | |
| | | P8B | | | | | | | | | | | | | |
| | | P9B | | | | | | | | | | | | | |
| | | P10B | | | | | | | | | | | | | |
| | | P11B | | | | | | | | | | | | | |
| | | P12B | | | | | | | | | | | | | |
| | | P13B | | | | | | | | | | | | | |
| | | P14B | | | | 87 | | | | | | | | | |
| | | P15B | | | | | 87 | | | | | | | | |
| | | P16B | | | | | | | | | | 87 | | | |
| | Other resin | Vinyl chloride-based resin | | 5 | 10 | | | | | | | | | | |
| | | Acrylic-based resin | | | | | | | | 5 | 10 | | | | |
| | Solvent | EA | 5 | 5 | 5 | 5 | 5 | 5 | 5 | 5 | 5 | 5 | 5 | 5 | 5 |
| | | IPA | 5 | 5 | 5 | 5 | 5 | 5 | 5 | 5 | 5 | 5 | 5 | 5 | 5 |
| | Pigment | Silica particles | | 3 | 3 | 3 | 3 | | 10 | 3 | 3 | 3 | | | |
| | | Polyethylene particles | | | | | | 1.5 | | | | | | | |
| | | Barium sulfate | | | | | | 15 | | | | | | | |
| | | Copper phthalocyanine | 10 | | | | | | | | | | 10 | 10 | 10 |
| | Total | | 100 | 100 | 100 | 100 | 100 | 100 | 100 | 100 | 100 | 100 | 100 | 100 | 100 |
| Detachability in surface-printed item 40°C | | | 4 | 5 | 5 | 5 | 5 | 5 | 5 | 5 | 5 | 4 | 3 | 3 | 3 |
| Detachability in laminated body 40°C | | | 4 | 5 | 5 | 5 | 4 | 5 | 5 | 5 | 5 | 4 | 3 | 3 | 3 |
| Tape adhesion | | | 5 | 5 | 4 | 4 | 4 | 5 | 5 | 5 | 4 | 5 | 5 | 5 | 3 |
| Retort resistance | | | 5 | 5 | 5 | 5 | 4 | 5 | 5 | 5 | 5 | 4 | 4 | 5 | 3 |
| Drying properties | | | 4 | 4 | 4 | 4 | 4 | 4 | 4 | 4 | 4 | 4 | 5 | 4 | 3 |

[Table 4]

| Table 4 | | | Mn | $R^1$ | $R^2$ | Synthesis Example C1 | Synthesis Example C2 | Synthesis Example C3 | Synthesis Example C4 | Synthesis Example C5 | Synthesis Example C6 | Synthesis Example C7 | Synthesis Example C8 | Synthesis Example C9 | Synthesis Example C10 | Synthesis Example C11 | Synthesis Example C12 | Synthesis Example C13 | Synthesis Example C14 | Synthesis Example C15 | Synthesis Example C16 | Synthesis Example C17 |
|---|---|---|---|---|---|---|---|---|---|---|---|---|---|---|---|---|---|---|---|---|---|---|
| | | | | | | C1 | C2 | C3 | C4 | C5 | C6 | C7 | C8 | C9 | C10 | C11 | C12 | C13 | C14 | C15 | C16 | C17 |
| Parts by weight | Dicarboxylic acid | Eicosanedioic acid | 343 | 18 | | | | | | | | | | | | | | | | | | |
| | | 1,10-decanedicarboxylic acid | 230 | 10 | | 54.3 | | | | | | | | | | | | | | | | |
| | | Sebacic acid | 202 | 8 | | | 55.8 | 61.2 | 61.2 | | 71.3 | | | | | | | | 42.0 | | | |
| | | Adipic acid | 146 | 4 | | | | | | 25.8 | | 53.6 | 53.6 | 51.8 | 54.2 | 55.2 | 56.8 | 60.4 | | 64.5 | | |
| | | Terephthalic acid | 166 | 6 | | | | | | 29.4 | | | | | | | | | | | | |
| | | Succinic acid | 118 | 2 | | | | | | | | | | | | | | | 24.5 | | 59.6 | 59.6 |
| | Diol | 1,16-hexadecanediol | 258 | | 16 | | | | | | | | | | | | | | | | | |
| | | 1,10-decanediol | 174 | | 10 | 45.7 | | | | | | | | | | | | | | | | |
| | | 1,8-octanediol | 146 | | 8 | | 44.2 | | | | | | | | | | | | | | | |
| | | 1,6-hexanediol | 118 | | 6 | | | 38.8 | | | | 46.4 | | | | 23.8 | | | | | | |
| | | 3-methyl-1,5-pentanediol | 118 | | 5 | | | | 38.8 | 44.8 | | | 46.4 | 48.2 | 45.8 | | | | | | | |
| | | Neopentyl glycol | 104 | | 3 | | | | | | | | | | | 21.0 | 43.2 | | | | | |
| | | 2-methyl-1,3-propanediol | 90 | | 3 | | | | | | | | | | | | | 39.6 | | | | |
| | | 1,3-propanediol | 76 | | 3 | | | | | | 28.7 | | | | | | | | 33.5 | | 40.4 | |
| | | 1,2-propanediol | 76 | | 2 | | | | | | | | | | | | | | | 35.5 | | 40.4 |
| | Total | | | | | 100 | 100 | 100 | 100 | 100 | 100 | 100 | 100 | 100 | 100 | 100 | 100 | 100 | 100 | 100 | 100 | 100 |
| Number average molecular weight Mn | | | | | | 2000 | 2000 | 2000 | 2000 | 2000 | 2000 | 2000 | 2000 | 1000 | 3000 | 2000 | 2000 | 2000 | 2000 | 2000 | 2000 | 2000 |
| Hydroxyl value [mgKOH/g] | | | | | | 56.1 | 56.1 | 56.1 | 56.1 | 56.1 | 56.1 | 56.1 | 56.1 | 112.2 | 37.4 | 56.1 | 56.1 | 56.1 | 56.1 | 56.1 | 56.1 | 56.1 |
| Ester bond concentration [mmol/g] | | | | | | 4.5 | 5.3 | 5.9 | 5.9 | 6.9 | 6.9 | 7.1 | 7.1 | 6.7 | 7.3 | 7.3 | 7.6 | 8.1 | 8.1 | 8.7 | 9.9 | 9.9 |
| Number of linear carbon atoms between COOH or OH | | | $R^1$ (COOH) | | | 10 | 8 | 8 | 8 | 5 | 8 | 4 | 4 | 4 | 4 | 4 | 4 | 4 | 5 | 4 | 2 | 2 |
| | | | $R^2$ (OH) | | | 10 | 8 | 6 | 5 | 5 | 3 | 6 | 5 | 5 | 5 | 4.5 | 3 | 3 | 3 | 2 | 3 | 2 |
| | | | Total | | | 20 | 16 | 14 | 13 | 10 | 11 | 10 | 9 | 9 | 9 | 8.5 | 7 | 7 | 8 | 6 | 5 | 4 |

[Table 4-1]

| Table 4-1 | | Parts by mass | | | | | | | | | | | | | | |
|---|---|---|---|---|---|---|---|---|---|---|---|---|---|---|---|---|
| | | Urethanization reaction step | | | | | | | Ureaization reaction step | | | | | Solid fraction adjustment | Total |
| | | Polyester polyol | | | | | | | | | | | | | |
| | | Table 4 Resin No. | Parts by mass | PCL | PPG | DMBA | IPDI | MEK | AEA | IPDA | MEA | DBA | IPA | MEK | |
| Synthesis Example 1a | U1 | C1 | 158.7 | | 15.9 | 27.6 | 88.2 | 200 | 9.1 | | 0.5 | | 350 | 150 | 1000 |
| Synthesis Example 2a | U2 | C2 | 158.7 | | 15.9 | 27.6 | 88.2 | 200 | 9.1 | | 0.5 | | 350 | 150 | 1000 |
| Synthesis Example 3a | U3 | C3 | 158.7 | | 15.9 | 27.6 | 88.2 | 200 | 9.1 | | 0.5 | | 350 | 150 | 1000 |
| Synthesis Example 4a | U4 | C4 | 158.7 | | 15.9 | 27.6 | 88.2 | 200 | 9.1 | | 0.5 | | 350 | 150 | 1000 |
| Synthesis Example 5a | U5 | C5 | 158.7 | | 15.9 | 27.6 | 88.2 | 200 | 9.1 | | 0.5 | | 350 | 150 | 1000 |
| Synthesis Example 6a | U6 | C6 | 158.7 | | 15.9 | 27.6 | 88.2 | 200 | 9.1 | | 0.5 | | 350 | 150 | 1000 |
| Synthesis Example 7a | U7 | C7 | 158.7 | | 15.9 | 27.6 | 88.2 | 200 | 9.1 | | 0.5 | | 350 | 150 | 1000 |
| Synthesis Example 8a | U8 | C8 | 174.6 | | | 27.6 | 88.2 | 200 | 9.1 | | 0.5 | | 350 | 150 | 1000 |
| Synthesis Example 9a | U9 | C8 | 193.5 | | | 27.4 | 76.3 | 200 | 2.8 | | 0.2 | | 350 | 150 | 1000 |
| Synthesis Example 10a | U10 | C8 | 120.3 | | | 27.5 | 115.6 | 200 | 8.7 | 27.3 | 0.7 | | 350 | 150 | 1000 |
| Synthesis Example 11a | U11 | C9 | 158.3 | | | 27.7 | 104.3 | 200 | 9.3 | | 0.4 | | 350 | 150 | 1000 |
| Synthesis Example 12a | U12 | C10 | 178.1 | | | 28.0 | 84.0 | 200 | 9.6 | | 0.3 | | 350 | 150 | 1000 |

(continued)

| Table 4-1 | | Parts by mass | | | | | | | | | | | | | | |
|---|---|---|---|---|---|---|---|---|---|---|---|---|---|---|---|---|
| | | Urethanization reaction step | | | | | | | Ureaization reaction step | | | | | Solid fraction adjustment | Total |
| | | Polyester polyol | | | | | | | | | | | | | |
| | | Table 4 Resin No. | Parts by mass | PCL | PPG | DMBA | IPDI | MEK | AEA | IPDA | MEA | DBA | IPA | MEK | |
| Synthesis Example 13a | U13 | C11 | 158.7 | | 15.9 | 27.6 | 88.2 | 200 | 9.1 | | 0.5 | | 350 | 150 | 1000 |
| Synthesis Example 14a | U14 | C12 | 158.7 | | 15.9 | 27.6 | 88.2 | 200 | 9.1 | | 0.5 | | 350 | 150 | 1000 |
| Synthesis Example 15a | U15 | C13 | 158.7 | | 15.9 | 27.6 | 88.2 | 200 | 9.1 | | 0.5 | | 350 | 150 | 1000 |
| Synthesis Example 16a | U16 | C14 | 158.7 | | 15.9 | 27.6 | 88.2 | 200 | 9.1 | | 0.5 | | 350 | 150 | 1000 |
| Synthesis Example 17a | U17 | C15 | 158.7 | | 15.9 | 27.6 | 88.2 | 200 | 9.1 | | 0.5 | | 350 | 150 | 1000 |
| Synthesis Example 18a | U18 | C16 | 158.7 | | 15.9 | 27.6 | 88.2 | 200 | 9.1 | | 0.5 | | 350 | 150 | 1000 |
| Synthesis Example 19a | U19 | C17 | 158.7 | | 15.9 | 27.6 | 88.2 | 200 | 9.1 | | 0.5 | | 350 | 150 | 1000 |
| Synthesis Example 20a | U20 | C17 | 191.0 | | 19.1 | 13.4 | 67.9 | 200 | 8.0 | | 0.6 | | 350 | 150 | 1000 |
| Synthesis Example 21a | U21 | C17 | 123.4 | | 12.3 | 45.7 | 109.8 | 200 | 8.4 | | 0.4 | | 350 | 150 | 1000 |
| Synthesis Example 22a | U22 | C17 | 161.6 | | 16.2 | 28.1 | 84.4 | 200 | 9.3 | | 0.5 | | 350 | 150 | 1000 |
| Synthesis Example 23a | U23 | C17 | 111.1 | | 63.5 | 27.6 | 88.2 | 200 | 9.1 | | 0.5 | | 350 | 150 | 1000 |
| Synthesis Example 24a | U24 | | | 158.7 | 15.9 | 27.6 | 88.2 | 200 | 9.1 | | 0.5 | | 350 | 150 | 1000 |

(continued)

| Table 4-1 | | Parts by mass | | | | | | | | | | | | | | |
|---|---|---|---|---|---|---|---|---|---|---|---|---|---|---|---|---|
| | | Urethanization reaction step | | | | | | | Ureaization reaction step | | | | | Solid fraction adjustment | Total |
| | | Polyester polyol | | PCL | PPG | DMBA | IPDI | MEK | AEA | IPDA | MEA | DBA | IPA | MEK | |
| | | Table 4 Resin No. | Parts by mass | | | | | | | | | | | | |
| Synthesis Example 25a | U25 | C16 | 155.7 | | 15.6 | 27.8 | 86.5 | 200 | | 13.9 | | 0.5 | 350 | 150 | 1000 |
| Synthesis Example 26a | U26 | C17 | 141.1 | | 14.1 | 27.7 | 92.4 | 200 | 9.2 | 15.0 | 0.4 | | 350 | 150 | 1000 |

[Table 4-2]

| Table 4-2 | | Property values | | | | | | | |
|---|---|---|---|---|---|---|---|---|---|
| | | Mw | Mw/Mn | Acid value [mgKOH/g] | Hydroxyl value [mgKOH/g] | Polyester polyol percentage in polyol [%] | Urethane bond concentration [mmol/g] | Urea bond concentration [mmol/g] | Urethane bond concentration + urea bond concentration [mmol/g] |
| Synthesis Example 1a | U1 | 45,000 | 3.9 | 34.9 | 17.8 | 90.9 | 1.83 | 0.61 | 2.43 |
| Synthesis Example 2a | U2 | 43,000 | 3.6 | 34.9 | 17.8 | 90.9 | 1.83 | 0.61 | 2.43 |
| Synthesis Example 3a | U3 | 48,000 | 4.0 | 34.9 | 17.8 | 90.9 | 1.83 | 0.61 | 2.43 |
| Synthesis Example 4a | U4 | 41,000 | 3.5 | 34.9 | 17.8 | 90.9 | 1.83 | 0.61 | 2.43 |
| Synthesis Example 5a | U5 | 35,000 | 3.1 | 34.9 | 17.8 | 90.9 | 1.83 | 0.61 | 2.43 |
| Synthesis Example 6a | U6 | 37,000 | 3.3 | 34.9 | 17.8 | 90.9 | 1.83 | 0.61 | 2.43 |
| Synthesis Example 7a | U7 | 38,000 | 2.9 | 34.9 | 17.8 | 90.9 | 1.83 | 0.61 | 2.43 |
| Synthesis Example 8a | U8 | 38,000 | 3.0 | 34.9 | 17.8 | 100.0 | 1.83 | 0.61 | 2.43 |
| Synthesis Example 9a | U9 | 28,000 | 2.6 | 34.5 | 5.4 | 100.0 | 1.88 | 0.19 | 2.06 |

(continued)

| Table 4-2 | | Property values | | | | | | | |
|---|---|---|---|---|---|---|---|---|---|
| | | Mw | Mw/Mn | Acid value [mgKOH/g] | Hydroxyl value [mgKOH/g] | Polyester polyol percentage in polyol [%] | Urethane bond concentration [mmol/g] | Urea bond concentration [mmol/g] | Urethane bond concentration + urea bond concentration [mmol/g] |
| Synthesis Example 10a | U10 | 42,000 | 3.6 | 34.7 | 17.6 | 100.0 | 1.64 | 1.66 | 3.30 |
| Synthesis Example 11a | U11 | 35,000 | 3.1 | 35.0 | 17.8 | 100.0 | 2.30 | 0.61 | 2.92 |
| Synthesis Example 12a | U12 | 32,000 | 4.0 | 35.3 | 18.2 | 100.0 | 1.66 | 0.63 | 2.29 |
| Synthesis Example 13a | U13 | 37,000 | 3.6 | 34.9 | 17.8 | 90.9 | 1.83 | 0.61 | 2.43 |
| Synthesis Example 14a | U14 | 42,000 | 3.7 | 34.9 | 17.8 | 90.9 | 1.83 | 0.61 | 2.43 |
| Synthesis Example 15a | U15 | 48,000 | 4.0 | 34.9 | 17.8 | 90.9 | 1.83 | 0.61 | 2.43 |
| Synthesis Example 16a | U16 | 34,000 | 3.0 | 34.9 | 17.8 | 90.9 | 1.83 | 0.61 | 2.43 |
| Synthesis Example 17a | U17 | 26,000 | 2.8 | 34.9 | 17.8 | 90.9 | 1.83 | 0.61 | 2.43 |
| Synthesis Example 18a | U18 | 30,000 | 3.0 | 34.9 | 17.8 | 90.9 | 1.83 | 0.61 | 2.43 |

(continued)

| Table 4-2 | | Property values | | | | | | | |
|---|---|---|---|---|---|---|---|---|---|
| | | Mw | Mw/Mn | Acid value [mgKOH/g] | Hydroxyl value [mgKOH/g] | Polyester polyol percentage in polyol [%] | Urethane bond concentration [mmol/g] | Urea bond concentration [mmol/g] | Urethane bond concentration + urea bond concentration [mmol/g] |
| Synthesis Example 19a | U19 | 35,000 | 3.3 | 34.9 | 17.8 | 90.9 | 1.83 | 0.61 | 2.43 |
| Synthesis Example 20a | U20 | 42,000 | 4.3 | 17.0 | 16.1 | 90.9 | 1.31 | 0.54 | 1.85 |
| Synthesis Example 21a | U21 | 38,000 | 4.5 | 57.7 | 16.2 | 90.9 | 2.51 | 0.56 | 3.07 |
| Synthesis Example 22a | U22 | 52,000 | 7.0 | 35.5 | 18.1 | 90.9 | 1.86 | 0.62 | 2.48 |
| Synthesis Example 23a | U23 | 31,000 | 3.1 | 34.9 | 17.8 | 63.6 | 1.83 | 0.61 | 2.43 |
| Synthesis Example 24a | U24 | 30,000 | 3.0 | 34.9 | 17.8 | 90.9 | 1.83 | 0.61 | 2.43 |
| Synthesis Example 25a | U25 | 30,000 | 3.0 | 35.1 | 0.0 | 90.9 | 1.82 | 0.56 | 2.38 |
| Synthesis Example 26a | U26 | 35,000 | 3.3 | 35.0 | 17.8 | 90.9 | 1.76 | 1.01 | 2.77 |

[Table 4-3]

| Table 4-3 | | | Example 1a | Example 2a | Example 3a | Example 4a | Example 5a | Example 6a | Example 7a | Example 8a | Example 9a | Example 10a | Example 11a | Example 12a |
|---|---|---|---|---|---|---|---|---|---|---|---|---|---|---|
| | | | T1 | T2 | T3 | T4 | T5 | T6 | T7 | T8 | T9 | T10 | T11 | T12 |
| Ink composition | Polyurethane resin | U1 | 87 | | | | | | | | | | | |
| | | U2 | | 87 | | | | | | | | | | |
| | | U3 | | | 87 | | | | | | | | | |
| | | U4 | | | | 87 | | | | | | | | |
| | | U5 | | | | | 87 | | | | | | | |
| | | U6 | | | | | | 87 | | | | | | |
| | | U7 | | | | | | | 87 | | | | | |
| | | U8 | | | | | | | | 87 | | | | |
| | | U9 | | | | | | | | | 87 | | | |
| | | U10 | | | | | | | | | | 87 | | |
| | | U11 | | | | | | | | | | | 87 | |
| | | U12 | | | | | | | | | | | | 87 |
| | Solvent | EA | 5 | 5 | 5 | 5 | 5 | 5 | 5 | 5 | 5 | 5 | 5 | 5 |
| | | IPA | 5 | 5 | 5 | 5 | 5 | 5 | 5 | 5 | 5 | 5 | 5 | 5 |
| | Pigment | Silica particles | 3 | 3 | 3 | 3 | 3 | 3 | 3 | 3 | 3 | 3 | 3 | 3 |
| | Total | | 100 | 100 | 100 | 100 | 100 | 100 | 100 | 100 | 100 | 100 | 100 | 100 |
| Detachability in surface-printed item 40°C | | | 3 | 3 | 3 | 3 | 4 | 4 | 4 | 4 | 3 | 3 | 4 | 4 |
| Detachability in laminated body 40°C | | | 3 | 3 | 3 | 3 | 3 | 3 | 4 | 4 | 3 | 3 | 4 | 4 |
| Tape adhesion | | | 4 | 4 | 4 | 5 | 4 | 4 | 5 | 5 | 5 | 5 | 4 | 5 |
| Retort resistance | | | 3 | 3 | 3 | 4 | 3 | 3 | 5 | 5 | 5 | 3 | 4 | 4 |
| Drying properties | | | 4 | 4 | 4 | 4 | 4 | 4 | 4 | 4 | 4 | 4 | 4 | 4 |

[Table 4-4]

| Table 4-4 | | | Example 13a | Example 14a | Example 15a | Example 16a | Example 17a | Example 18a | Example 19a | Example 20a | Example 21a | Example 22a | Example 23a | Example 24a | Example 25a | Example 26a | Example 27a | Example 28a | Example 29a |
|---|---|---|---|---|---|---|---|---|---|---|---|---|---|---|---|---|---|---|---|
| | | | T13 | T14 | T15 | T16 | T17 | T18 | T19 | T20 | T21 | T22 | T23 | T24 | T25 | T26 | T27 | T28 | T29 |
| Ink composition | Polyurethane resin | U1 | | | | | | | | | | | | | | | 80 | | |
| | | U13 | 87 | | | | | | | | | | | | | | | | |
| | | U14 | | 87 | | | | | | | | | | | | | | | |
| | | U15 | | | 87 | | | | | | | | | | | | | | |
| | | U16 | | | | 87 | | | | | | | | | | | | | |
| | | U17 | | | | | 87 | | | | | | | | | | | | |
| | | U18 | | | | | | 87 | | | | | | | | | | | |
| | | U19 | | | | | | | 87 | | | | | | | | | | |
| | | U20 | | | | | | | | 87 | | | | | | | | 80 | |
| | | U21 | | | | | | | | | 87 | | | | | | | | 80 |
| | | U22 | | | | | | | | | | 87 | | | | | | | |
| | | U23 | | | | | | | | | | | 87 | | | | | | |
| | | U24 | | | | | | | | | | | | 87 | | | | | |
| | | U25 | | | | | | | | | | | | | 87 | | | | |
| | | U26 | | | | | | | | | | | | | | 87 | | | |
| | Solvent | EA | 5 | 5 | 5 | 5 | 5 | 5 | 5 | 5 | 5 | 5 | 5 | 5 | 5 | 5 | 5 | 5 | 5 |
| | | IPA | 5 | 5 | 5 | 5 | 5 | 5 | 5 | 5 | 5 | 5 | 5 | 5 | 5 | 5 | 5 | 5 | 5 |
| | Pigment | Silica particles | 3 | 3 | 3 | 3 | 3 | 3 | 3 | 3 | 3 | 3 | 3 | 3 | 3 | 3 | | | |
| | | Copper phthalocyanine | | | | | | | | | | | | | | | 10 | 10 | 10 |
| | Total | | 100 | 100 | 100 | 100 | 100 | 100 | 100 | 100 | 100 | 100 | 100 | 100 | 100 | 100 | 100 | 100 | 100 |
| Detachability in surface-printed item 40°C | | | 5 | 5 | 5 | 5 | 5 | 5 | 5 | 3 | 5 | 3 | 4 | 5 | 4 | 5 | 3 | 3 | 4 |
| Detachability in laminated body 40°C | | | 4 | 4 | 4 | 4 | 5 | 5 | 5 | 3 | 4 | 3 | 4 | 5 | 3 | 5 | 3 | 3 | 4 |
| Tape adhesion | | | 5 | 5 | 5 | 5 | 5 | 5 | 5 | 5 | 3 | 3 | 5 | 5 | 4 | 5 | 4 | 5 | 3 |
| Retort resistance | | | 4 | 5 | 5 | 5 | 5 | 5 | 5 | 4 | 3 | 3 | 4 | 5 | 5 | 5 | 3 | 4 | 3 |
| Drying properties | | | 4 | 4 | 4 | 4 | 4 | 4 | 4 | 5 | 3 | 3 | 4 | 4 | 4 | 4 | 4 | 5 | 3 |

[Table 5-1]

| Table 5-1 | | Parts by mass | | | | | | | | | | | | | | |
|---|---|---|---|---|---|---|---|---|---|---|---|---|---|---|---|---|
| | | Urethanization reaction step | | | | | | Ureaization step | | | | | Solid fraction adjustment | | | Total |
| | | Polyester polyol No. / parts by mass | | PPG | DMBA | IPDI | MEK | AEA | IPDA | MEA | DBA | IPA | MEK | Water | 28% ammonia water | |
| Comparative Synthesis Example 1B | PP1B | PPA | 215.7 | | 7.3 | 65.4 | 200 | 11.2 | | 0.5 | | 350 | 150 | | | 1000 |
| Comparative Synthesis Example 2B | PP2B | PPA | 107.4 | | 61.5 | 124.8 | 200 | 6.1 | | 0.2 | | 350 | 150 | | | 1000 |
| Comparative Synthesis Example 3B | PP3B | PPA | 62.9 | 94.3 | 26.9 | 93.5 | 200 | | 21.5 | | 0.9 | 350 | 150 | | | 1000 |
| Comparative Synthesis Example 4B | PP4B | PPA | 55.2 | 82.7 | 27.9 | 111.5 | 200 | 22.2 | | 0.4 | | 350 | 150 | | | 1000 |
| Comparative Synthesis Example 5B | PP5B | PPA | 132.7 | 29.5 | 27.7 | 96.5 | 200 | 13.6 | | | | 150 | | 690.0 | 10.0 | 1350 |
| Comparative Synthesis Example 6B | PP6B | C8 | 203.4 | 20.3 | 8.0 | 59.9 | 200 | 7.9 | | 0.4 | | 350 | 150 | | | 1000 |
| Comparative Synthesis Example 7B | PP7B | C8 | 97.5 | 9.8 | 61.4 | 124.6 | 200 | 6.6 | | 0.3 | | 350 | 150 | | | 1000 |
| Comparative Synthesis Example 8B | PP8B | D1 | 143.1 | 31.8 | 27.7 | 88.4 | 200 | 9.1 | | | | 150 | | 690.0 | 10.0 | 1350 |

[Table 5-2]

| Table 5-2 | | Property values | | | | | | | | |
|---|---|---|---|---|---|---|---|---|---|---|
| | | Mw | Mw/Mn | Acid value [mgKOH/g] | Hydroxyl value [mgKOH/g] | Polyester polyol percentage in polyol [%] | Urethane bond concentration [mmol/g] | Urea bond concentration [mmol/g] | Urethane bond concentration + urea bond concentration [mmol/g] |
| Comparative Synthesis Example 1B | PP1B | 40000 | 3.5 | 9.2 | 21.6 | 100 | 1.05 | 0.75 | 1.79 |
| Comparative Synthesis Example 2B | PP2B | 39000 | 3.4 | 77.6 | 11.4 | 100 | 3.13 | 0.40 | 3.52 |
| Comparative Synthesis Example 3B | PP3B | 35000 | 3.2 | 33.9 | 0.0 | 40 | 1.73 | 0.87 | 2.60 |
| Comparative Synthesis Example 4B | PP4B | 38000 | 3.3 | 352 | 41.1 | 40 | 1.71 | 1.44 | 3.16 |
| Comparative Synthesis Example 5B | PP5B | 43000 | 3.8 | 35.0 | 24.4 | 82 | 1.79 | 0.87 | 2.66 |
| Comparative Synthesis Example 6B | PP6B | 43000 | 4.1 | 10.1 | 15.6 | 90.9 | 1.11 | 0.53 | 1.64 |
| Comparative Synthesis Example 7B | PP7B | 45000 | 4.3 | 77.5 | 12.8 | 90.9 | 3.12 | 0.44 | 3.56 |
| Comparative Synthesis Example 8B | PP8B | 48000 | 4.1 | 34.9 | 16.4 | 81.8 | 1.83 | 0.58 | 2.41 |

[Table 5-3]

| Table 5-3 | | | Comparative Example 1B | Comparative Example 2B | Comparative Example 3B | Comparative Example 4B | Comparative Example 5B | Comparative Example 6B | Comparative Example 7B | Comparative Example 8B | Comparative Example 9B |
|---|---|---|---|---|---|---|---|---|---|---|---|
| | | | SS1B | SS2B | SS3B | SS4B | SS5B | SS6B | SS7B | SS8B | SS9B |
| Ink composition | Comparative polyurethane resin | PP1B | 87 | | | | | | | | 80 |
| | | PP2B | | 87 | | | | | | | |
| | | PP3B | | | 87 | | | | | | |
| | | PP4B | | | | 87 | | | | | |
| | | PP5B | | | | | 87 | | | | |
| | | PP6B | | | | | | 87 | | | |
| | | PP7B | | | | | | | 87 | | |
| | | PP8B | | | | | | | | 87 | |
| | Solvent | EA | 5 | 5 | 5 | 5 | | 5 | 5 | | 5 |
| | | IPA | 5 | 5 | 5 | 5 | | 5 | 5 | | 5 |
| | | Water | | | | | 10 | | | 10 | |
| | Pigment | Silica particles | 3 | 3 | 3 | 3 | 3 | 3 | 3 | 3 | |
| | | Copper phthalocyanine | | | | | | | | | 10 |
| | Total | | 100 | 100 | 100 | 100 | 100 | 100 | 100 | 100 | 100 |
| Detachability in surface-printed item 40°C | | | 1 | 5 | 1 | 2 | 4 | 1 | 5 | 2 | 1 |
| Detachability in laminated body 40°C | | | 1 | 4 | 1 | 1 | 3 | 1 | 4 | 1 | 1 |
| Tape adhesion | | | 5 | 2 | 5 | 3 | 5 | 5 | 2 | 3 | 5 |
| Retort resistance | | | 5 | 1 | 4 | 1 | 1 | 5 | 1 | 1 | 5 |
| Drying properties | | | 4 | 3 | 4 | 3 | 1 | 4 | 3 | 1 | 4 |

## Claims

1. Use of an organic solvent-based printing ink used for forming a detachable layer to enable recycling of a substrate 1 by separating a picture layer and/or a substrate 2 from a printed item or a laminated body having the substrate 1, the detachable layer, and the picture layer and/or the substrate 2 in that order, wherein

   the organic solvent-based printing ink comprises a polyurethane resin with an acid value of 15 to 70 mgKOH/g as a binder resin,
   the acid value is determined in accordance with JIS K0070, and
   a detachment of the detachable layer is caused by immersing the printed item or the laminated body in a basic aqueous solution.

2. The use of the organic solvent-based printing ink according to Claim 1, wherein a hydroxyl value of the polyurethane resin is 1 to 35 mgKOH/g, wherein the hydroxyl value is determined in accordance with JIS K0070.

3. The use of the organic solvent-based printing ink according to Claim 1 or 2, wherein the polyurethane resin contains a structural unit derived from a polyol, and the polyol comprises at least one compound selected from among polyester polyols, polyether polyols and polycarbonate polyols.

4. The use of the organic solvent-based printing ink according to Claim 1, wherein

   the polyurethane resin contains a structural unit derived from a polyol, and
   the polyol comprises at least 50% by mass of a polyester polyol with an ester bond concentration of 4 to 11 mmol/g.

5. The use of the organic solvent-based printing ink according to any one of Claims 1 to 4, wherein the organic solvent-based printing ink is an organic solvent-based clear ink.

6. The use of the organic solvent-based printing ink according to any one of Claims 1 to 5, wherein a molecular weight distribution (Mw/Mn) of the polyurethane resin is not more than 6.

7. The use of the organic solvent-based printing ink according to any one of Claims 3 to 6, wherein

   the polyester polyol is a condensation product of a dibasic acid having carboxyl groups at both terminals of an alkylene group ($R^1$), and a diol having hydroxyl groups at both terminals of an alkylene group ($R^2$),
   one of a number of carbon atoms linearly linking the two carboxyl groups of the dibasic acid and a number of carbon atoms linearly linking the two hydroxyl groups of the diol is a number from 1 to 6, and
   the alkylene groups ($R^1$) and ($R^2$) are substituted or unsubstituted alkylene groups.

8. The use of the organic solvent-based printing ink according to Claim 7, wherein the number of carbon atoms linearly linking the two carboxyl groups of the dibasic acid and the number of carbon atoms linearly linking the two hydroxyl groups of the diol are both numbers from 1 to 6.

9. The use of the organic solvent-based printing ink according to any one of Claims 1 to 8, wherein the organic solvent-based printing ink also comprises at least one resin selected from the group consisting of cellulose-based resins, vinyl chloride-based resins, rosin-based resins, acrylic resins, and styrene-maleic acid copolymer resins.

10. The use of the organic solvent-based printing ink according to any one of Claims 1 to 9, wherein the organic solvent-based printing ink also comprises a body pigment.

11. A recycled substrate manufacturing method comprising a step of immersing a printed item in a basic aqueous solution, wherein

    the printed item has a substrate 1, a detachable layer obtainable by the use according to any one of Claims 1 to 10, and a picture layer in that order,
    the basic aqueous solution comprises 0.5 to 10% by mass of a basic compound in the total basic aqueous solution, and a water temperature of the basic aqueous solution during immersion is within a range from 30 to 120°C.

12. A recycled substrate manufacturing method comprising a step of immersing a laminated body in a basic aqueous solution, wherein

the laminated body has a detachable layer obtainable by the use according to any one of Claims 1 to 10 and a picture layer and/or adhesive layer provided between a substrate 1 and a substrate 2,
the basic aqueous solution comprises 0.5 to 10% by mass of a basic compound in the total basic aqueous solution, and a water temperature of the basic aqueous solution during immersion is within a range from 30 to 120°C.

## Patentansprüche

1. Verwendung einer Druckfarbe auf organischer Lösungsmittelbasis, die zur Bildung einer ablösbaren Schicht verwendet wird, um das Recycling eines Substrats 1 zu ermöglichen, indem eine Bildschicht und/oder ein Substrat 2 von einem Druckerzeugnis oder einem laminierten Körper getrennt wird, der das Substrat 1, die ablösbare Schicht und die Bildschicht und/oder das Substrat 2 in dieser Reihenfolge aufweist, wobei

die Druckfarbe auf organischer Lösungsmittelbasis ein Polyurethanharz mit einer Säurezahl von 15 bis 70 mgKOH/g als Bindemittelharz umfasst,
der Säurewert gemäß JIS K0070 bestimmt wird, und
eine Ablösung der ablösbaren Schicht durch Eintauchen des Druckerzeugnisses oder des laminierten Körpers in eine basische wässrige Lösung veranlasst wird.

2. Verwendung der Druckfarbe auf organischer Lösungsmittelbasis nach Anspruch 1, wobei der Hydroxylwert des Polyurethanharzes 1 bis 35 mgKOH/g beträgt, wobei der Hydroxylwert gemäß JIS K0070 bestimmt wird.

3. Verwendung der Druckfarbe auf organischer Lösungsmittelbasis nach Anspruch 1 oder 2, wobei das Polyurethanharz eine Struktureinheit enthält, die von einem Polyol abgeleitet ist, und das Polyol mindestens eine Verbindung umfasst, die aus Polyesterpolyolen, Polyetherpolyolen und Polycarbonatpolyolen ausgewählt ist.

4. Verwendung der Druckfarbe auf organischer Lösungsmittelbasis nach Anspruch 1, wobei

das Polyurethanharz eine Struktureinheit enthält, die von einem Polyol abgeleitet ist, und
das Polyol mindestens 50 Masseprozent eines Polyesterpolyol mit einer Esterbindungskonzentration von 4 bis 11 mmol/g umfasst.

5. Verwendung der Druckfarbe auf organischer Lösungsmittelbasis nach einem der Ansprüche 1 bis 4, wobei die Druckfarbe auf organischer Lösungsmittelbasis eine klare Druckfarbe auf organischer Lösungsmittelbasis ist.

6. Verwendung der Druckfarbe auf organischer Lösungsmittelbasis nach einem der Ansprüche 1 bis 5, wobei die Molekulargewichtsverteilung (Mw/Mn) des Polyurethanharzes nicht mehr als 6 beträgt.

7. Verwendung der Druckfarbe auf organischer Lösungsmittelbasis nach einem der Ansprüche 3 bis 6, wobei

das Polyesterpolyol ein Kondensationsprodukt aus einer zweibasigen Säure mit Carboxylgruppen an beiden Enden einer Alkylengruppe ($R^1$) und einem Diol mit Hydroxylgruppen an beiden Enden einer Alkylengruppe ($R^2$) ist,
eines aus einer Zahl von Kohlenstoffatomen, die die beiden Carboxylgruppen der zweibasigen Säure linear verbinden, und einer Zahl von Kohlenstoffatomen, die die beiden Hydroxylgruppen des Diols linear verbinden, eine Zahl von 1 bis 6 ist, und
die Alkylengruppen ($R^1$) und ($R^2$) substituierte oder unsubstituierte Alkylengruppen sind.

8. Verwendung der Druckfarbe auf organischer Lösungsmittelbasis nach Anspruch 7, wobei die Zahl der Kohlenstoffatome, die die beiden Carboxylgruppen der zweibasigen Säure linear verbinden, und die Zahl der Kohlenstoffatome, die die beiden Hydroxylgruppen des Diols linear verbinden, beide Zahlen von 1 bis 6 sind.

9. Verwendung der Druckfarbe auf organischer Lösungsmittelbasis nach einem der Ansprüche 1 bis 8, wobei die organische Druckfarbe auf Lösungsmittelbasis zudem mindestens ein Harz enthält, das aus der Gruppe ausgewählt

ist, die aus Harzen auf Cellulosebasis, Harzen auf Vinylchloridbasis, Harzen auf Kolophoniumbasis, Acrylharzen und Styrol-Maleinsäure-Copolymerharzen besteht.

**10.** Verwendung der Druckfarbe auf organischer Lösungsmittelbasis nach einem der Ansprüche 1 bis 9, wobei die organische Druckfarbe auf Lösungsmittelbasis auch ein Körperpigment enthält.

**11.** Verfahren zur Herstellung eines recycelten Substrats, das einen Schritt des Eintauchens eines Druckerzeugnisses in eine basische wässrige Lösung umfasst, wobei

das Druckerzeugnis ein Substrat 1, eine ablösbare Schicht, die durch die Verwendung nach einem der Ansprüche 1 bis 10 erhältlich ist, und eine Bildschicht in dieser Reihenfolge aufweist,
die basische wässrige Lösung 0,5 bis 10 Massenprozent einer basischen Verbindung in der gesamten basischen wässrigen Lösung enthält, und die Wassertemperatur der basischen wässrigen Lösung während des Eintauchens im Bereich von 30 bis 120°C liegt.

**12.** Verfahren zur Herstellung eines recycelten Substrats, das einen Schritt des Eintauchens eines laminierten Körpers in eine basische wässrige Lösung umfasst, wobei

der laminierte Körper eine ablösbare Schicht, die durch die Verwendung nach einem der Ansprüche 1 bis 10 erhältlich ist, und eine Bildschicht und/oder Klebeschicht, die zwischen einem Substrat 1 und einem Substrat 2 vorgesehen ist, aufweist,
die basische wässrige Lösung 0,5 bis 10 Massenprozent einer basischen Verbindung in der gesamten basischen wässrigen Lösung enthält, und die Wassertemperatur der basischen wässrigen Lösung während des Eintauchens im Bereich von 30 bis 120°C liegt.

**Revendications**

**1.** Utilisation d'une encre d'impression à base de solvant organique utilisée pour former une couche décollable pour permettre le recyclage d'un substrat 1 en séparant une couche d'image et/ou un substrat 2 à partir d'un article imprimé ou d'un corps stratifié ayant le substrat 1, la couche décollable, et la couche d'image et/ou le substrat 2 dans cet ordre, dans laquelle

l'encre d'impression à base de solvant organique comprend une résine de polyuréthane avec une valeur d'acide de 15 à 70 mgKOH/g en tant que résine liante,
la valeur d'acide est déterminée conformément à JIS K0070, et
un décollage de la couche décollable est entraîné en immergeant l'article imprimé ou le corps stratifié dans une solution aqueuse basique.

**2.** Utilisation de l'encre d'impression à base de solvant organique selon la revendication 1, dans laquelle une valeur d'hydroxyle de la résine de polyuréthane est de 1 à 35 mgKOH/g, dans laquelle la valeur d'hydroxyle est déterminée conformément à JIS K0070.

**3.** Utilisation de l'encre d'impression à base de solvant organique selon la revendication 1 ou 2, dans laquelle la résine de polyuréthane contient un motif structural dérivé d'un polyol, et le polyol comprend au moins un composé sélectionné parmi des polyols de polyester, des polyols de polyéther et des polyols de polycarbonate.

**4.** Utilisation de l'encre d'impression à base de solvant organique selon la revendication 1, dans laquelle

la résine de polyuréthane contient un motif structural dérivé d'un polyol, et
le polyol comprend au moins 50 % en masse d'un polyol de polyester avec une concentration en liaison ester de 4 à 11 mmol/g.

**5.** Utilisation de l'encre d'impression à base de solvant organique selon l'une quelconque des revendications 1 à 4, dans laquelle l'encre d'impression à base de solvant organique est une encre transparente à base de solvant organique.

**6.** Utilisation de l'encre d'impression à base de solvant organique selon l'une quelconque des revendications 1 à 5,

dans laquelle une distribution de poids moléculaire (Mw/Mn) de la résine de polyuréthane n'est pas plus de 6.

**7.** Utilisation de l'encre d'impression à base de solvant organique selon l'une quelconque des revendications 3 à 6, dans laquelle

le polyol de polyester est un produit de condensation d'un acide dibasique ayant des groupes carboxyle aux deux terminaux d'un groupe alkylène ($R^1$), et un diol ayant des groupes hydroxyle au deux terminaux d'un groupe alkylène ($R^2$),
un d'un nombre d'atomes de carbone couplant linéairement les deux groupes carboxyle de l'acide dibasique et d'un nombre d'atomes de carbone couplant linéairement les deux groupes hydroxyle du diol est un nombre de 1 à 6, et
les groupes alkylène ($R^1$) et ($R^2$) sont des groupes alkylène substitués ou non substitués.

**8.** Utilisation de l'encre d'impression à base de solvant organique selon la revendication 7, dans laquelle le nombre d'atomes de carbone couplant linéairement les deux groupes carboxyle de l'acide dibasique et le nombre d'atomes de carbone couplant linéairement les deux groupes hydroxyle du diol sont tous les deux des nombres de 1 à 6.

**9.** Utilisation de l'encre d'impression à base de solvant organique selon l'une quelconque des revendications 1 à 8, dans laquelle l'encre d'impression à base de solvant organique comprend également au moins une résine sélectionnée parmi le groupe constitué de : résines à base de cellulose, résines à base de chlorure de vinyle, résines à base de colophane, résines acryliques, et résines copolymères styrène-acide maléique.

**10.** Utilisation de l'encre d'impression à base de solvant organique selon l'une quelconque des revendications 1 à 9, dans laquelle l'encre d'impression à base de solvant organique comprend également un pigment corporel.

**11.** Procédé de fabrication de substrat recyclé comprenant une étape d'immersion d'un article imprimé dans une solution aqueuse basique, dans lequel

l'article imprimé a un substrat 1, une couche décollable pouvant être obtenue par l'utilisation selon l'une quelconque des revendications 1 à 10, et une couche d'image dans cet ordre,
la solution aqueuse basique comprend 0,5 à 10 % en masse d'un composé basique dans la solution aqueuse basique totale, et une température d'eau de la solution aqueuse basique durant l'immersion est au sein d'une plage de 30 à 120 °C.

**12.** Procédé de fabrication de substrat recyclé comprenant une étape d'immersion d'un corps stratifié dans une solution aqueuse basique, dans lequel

le corps stratifié a une couche décollable pouvant être obtenue par l'utilisation selon l'une quelconque des revendications 1 à 10 et une couche d'image et/ou couche adhésive prévue entre un substrat 1 et un substrat 2,
la solution aqueuse basique comprend 0,5 à 10 % en masse d'un composé basique dans la solution aqueuse basique totale, et une température d'eau de la solution aqueuse basique durant l'immersion est au sein d'une plage de 30 à 120 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001131484 A
- JP H11209677 A
- EP 1209180 A1
- JP H0463877 A
- JP 58189272 A
- WO 2014147374 A1
- JP 2018229356 A
- JP 2019100042 A
- JP 2019162640 A